# EUROPÄISCHE PATENTSCHRIFT

(11) **EP 2 948 810 B1**
(45) Veröffentlichungstag und Bekanntmachung des Hinweises auf die Patenterteilung: **01.01.2020**
(21) Anmeldenummer: 14701716.4
(22) Anmeldetag: 23.01.2014
(51) Int. Cl.: G02B 21/00, G02B 27/58

(54) **LICHTMIKROSKOP UND MIKROSKOPIEVERFAHREN**
LIGHT MICROSCOPE AND MICROSCOPY METHOD
MICROSCOPE OPTIQUE ET PROCÉDÉ DE MICROSCOPIE

(30) Priorität: 25.01.2013 DE 102013001238
(43) Veröffentlichungstag der Anmeldung: 02.12.2015
(73) Patentinhaber: Carl Zeiss Microscopy GmbH, 07745 Jena (DE)
(72) Erfinder: BATHE, Wolfgang, 07743 Jena (DE); NETZ, Ralf, 07745 Jena (DE)
(74) Vertreter: Loritz, Rainer
(86) Internationale Anmeldenummer: PCT/EP2014/051301
(87) Internationale Veröffentlichungsnummer: WO 2014/114702

(56) Entgegenhaltungen:
- EP-A1- 1 359 452
- EP-A1- 2 317 362
- EP-A1- 2 520 965
- JP-A- H09 133 870

## Beschreibung

Die vorliegende Erfindung betrifft ein Lichtmikroskop nach dem Oberbegriff des Anspruchs 1. Zudem ist die Erfindung auf ein Mikroskopieverfahren gemäß dem Oberbegriff des Anspruchs 14 gerichtet.

Ein gattungsgemäßes Lichtmikroskop weist eine Probenebene auf, in welcher eine zu untersuchende Probe positionierbar ist, eine Lichtquelle zum Aussenden von Beleuchtungslicht, optische Abbildungsmittel zum Leiten des Beleuchtungslichts in die Probenebene und eine Detektoreinrichtung zum Nachweisen von Probenlicht, welches von der Probe kommt, wobei benachbarte Detektorelemente zueinander einen Abstand aufweisen, der kleiner ist als eine Airy-Disk, den ein Punkt in der Probenebene auf der Detektoreinrichtung erzeugt. Elektronikmittel können ein Bild der Probe auf Grundlage des nachgewiesenen Probenlichts bestimmen.

Bei einem gattungsgemäßen Mikroskopieverfahren zum Untersuchen einer Probe, die in einer Probenebene eines Lichtmikroskops positioniert wird, ist vorgesehen, dass Beleuchtungslicht in die Probenebene geleitet wird, dass das Beleuchtungslicht als Beleuchtungsabtastbewegung über die Probenebene bewegt wird und dass von der Probe kommendes Probenlicht mit einer Detektoreinrichtung nachgewiesen wird, welche mehrere Detektorelemente aufweist, wobei benachbarte Detektorelemente zueinander einen Abstand aufweisen, der kleiner ist als eine Airy-Disk, den ein Punkt in der Probenebene auf der Detektoreinrichtung erzeugt. Elektronikmittel können dabei ein Bild der Probe auf Grundlage des nachgewiesenen Probenlichts bestimmen. Bei solchen Lichtmikroskopen und Mikroskopieverfahren ist es ein grundlegendes Ziel, ein Probenbild mit möglichst hoher Auflösung und gutem Signal-zu-Rausch-Verhältnis zu erzeugen.

Hierzu werden bei dem gattungsgemäßen Lichtmikroskop und dem Mikroskopieverfahren Detektorelemente genutzt, die kleiner sind als eine Airy-Disk, den ein Punkt in der Probenebene auf der Detektoreinrichtung erzeugt.

Das Airy wird über die ersten Nullstellen der rotationssymmetrischen Lichtverteilung eines beugungsbegrenzten Beleuchtungsspots definiert. Ein Airy ist somit eine Ausdehnung eines Beugungsscheibchens in einer Bildebene, welches durch einen Punkt in der Probenebene hervorgerufen wird. Die Ausdehnung kann als Strecke zwischen den ersten Nullstellen des Beugungsscheibchens definiert sein. Eine beugungsbegrenzte Lichtverteilung mit der Größe von einem Airy hat einen Radius von 0,61 λ/NA. Dabei ist λ die Lichtwellenlänge und NA ist die numerische Apertur.

Zweckmäßigerweise kann der Abstand zwischen benachbarten Detektorelementen kleiner als eine halbe oder eine drittel Airy-Disk sein. Ein Punkt der Probenebene wird dadurch stets auf mehrere benachbarte Detektorelemente abgebildet.

Erkenntnisse, durch welche Maßnahmen hierbei eine Auflösungssteigerung erreicht werden kann, gehen auf C. Sheppard zurück und sind beschrieben in dem Artikel "Super-resolution in Confocal Imaging" von Colin Sheppard et al., erschienen in Optik 80, No. 2, 45 (1988). Für eine Erhöhung der Auflösung im Probenbild erfolgt dabei nach der Bildaufnahme eine Umsortierung und Verrechnung der Bilddaten mittels eines speziellen Algorithmus, was auch als Akkumulation verschobener Sub-Airy-Detektorwerte bezeichnet wird.

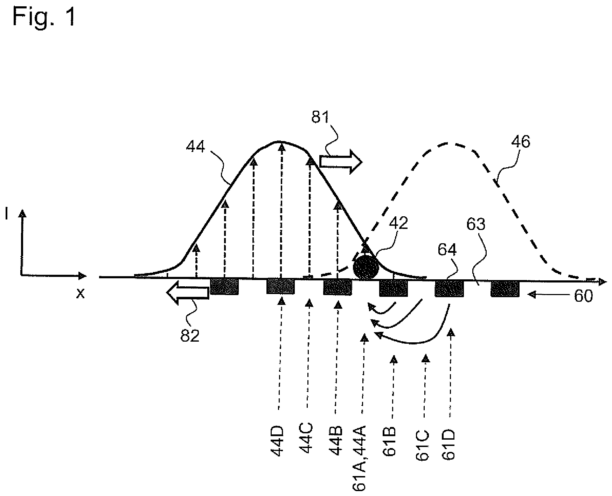

Ein solches Verfahren wird mit Bezug auf Fig. 1 erläutert. Dort ist schematisch eine Probe entlang der x-Achse einer Probenebene dargestellt. Die Probe umfasst einen Probenpunkt 42 oder ein fluoreszierendes Objekt 42. Zudem ist ein Beleuchtungsspot 44 dargestellt. Dessen Intensität I ist auf der Ordinate angegeben. Die Abmessungen des Beleuchtungsspots 44 können beugungsbegrenzt sein und sind in der x-Richtung größer als das Objekt 42. Trifft der Beleuchtungsspot 44 das Objekt 42, wird dieses zur Fluoreszenz angeregt und strahlt Probenlicht aus, welches von einer Detektoreinrichtung nachgewiesen werden kann.

In Fig. 1 ist weiterhin eine, hier unendlich scharfe, Abbildung einer solchen Detektoreinrichtung 60 in die Probenebene dargestellt. Die Detektoreinrichtung 60 umfasst mehrere Detektorelemente 63, 64. Diese empfangen nicht nur Probenlicht, das von einem Punkt der Probenebene ausgeht. Vielmehr wird auf jedes Detektorelement ein ausgedehnter Empfangsbereich abgebildet, welcher durch die PSF (Point Spread Function, Punktspreizfunktion) der Abbildung bestimmt ist. Die PSF für das Detektorelement 64 ist als gestrichelte Kurve 46 dargestellt. Die Abmessungen des Beleuchtungsspots 44 können ebenfalls durch eine PSF einer Punktlichtquelle bestimmt sein.

Die gemessene Lichtintensität eines bestimmten Detektorelements 64 wird nun durch eine Gesamt-PSF bestimmt, welche das Produkt der PSF zum Beleuchtungsspot 44 und der PSF 46 zum Detektorelement 64 ist. Das Maximum der Gesamt-PSF liegt in etwa mittig zwischen dem Beleuchtungsspot 44 und der PSF 46 des jeweiligen Detektorelements 64. Im dargestellten Beispiel empfängt das Detektorelement 64 daher Licht hauptsächlich von einem Ort 61A, der mittig zwischen dem Beleuchtungsspot 44 und der PSF 46 liegt. Hingegen misst das Detektorelement 64 kaum Licht von der Position 61D, obwohl an dieser die zugehörige PSF 46 ihr Maximum hat.

Zur Abtastung der Probe wird nun der Beleuchtungsspot von der Position 44D auf beispielweise 44B verschoben. Dies vorliegend wird als Beleuchtungsabtastbewegung bezeichnet. Hierdurch verschiebt sich die Gesamt-PSF des Detektorelements 64. Dieses misst nun nicht mehr Licht von hauptsächlich der Position 61A, sondern 61 B.

Dieser Umstand kann zur Auflösungssteigerung genutzt werden. Dazu werden die Detektorelemente zu jeder Position des Beleuchtungsspots 44 ausgelesen. Die dabei gemessenen Probenlichtsignale werden abhängig von der Position des Beleuchtungsspots 44 verschiedenen Probenbereichen zugeordnet. Das heißt, die von ein und demselben Detektorelement gemessenen Probenlichtsignale werden abhängig von der Position des Beleuchtungsspots 44 umsortiert.

Das Umsortieren ist durch die gebogenen Pfeile veranschaulicht. Demnach wird ein Signal des Detektorelementes 64 dem Ort 61A des Objekts 42 zugeordnet, wenn sich ein Beleuchtungsspot an der Stelle 44D befindet. Analog wird ein Signal des Detektorelementes am Ort 61C bei einem Beleuchtungsspot an der Stelle 44C dem Ort des Objekts 42 zugeordnet. Auch wird ein Signal des Detektorelementes 61B bei einem Beleuchtungsspot an der Stelle 44B dem Ort des Objekts 42 zugeordnet.

In dieser Weise kann eine Auflösungsverbesserung erreicht werden. Der apparative Aufwand zum Erreichen dieses Umsortierens ist jedoch hoch. Zudem ist ein Zeitbedarf zum Berechnen des Umsortierens verhältnismäßig groß.

Die Verbesserung der Auflösung kann auch als stärkere Gewichtung der höheren Raumfrequenzen im Optischen-Transfer-Spektrum eines Single-Spot-Systems beschrieben werden. Weil für die Bilderzeugung die Lichtverteilung innerhalb eines 1-Airy-Pinhole-Durchmessers verwendet wird, können mehr Photonen nachgewiesen werden. Das Signal-zu-Rausch-Verhältnis ist damit verbessert.

Vergleichbare Mikroskope, die eine Detektion mit Sub-Airy-Auflösung nutzen, sind in EP 2 520 965 A1 und in York et al., Nature Methods Vol. 9, 749-754 (2012) beschrieben. Zudem wird eine Multi-Spot-Beleuchtung genutzt. Dabei wird jeder Lichtspot oder -fleck nacheinander über verschiedene Probenbereiche gescannt. So kann zwar eine Geschwindigkeitserhöhung erreicht werden. Bei dem Scan müssen jedoch für verschiedene Scan-Positionen jeweils von der Detektoreinrichtung aufgenommene Bilder ausgelesen werden und wie zuvor beschrieben verrechnet werden, siehe beispielsweise "Supplementary Note 1" des Artikels von York et al. Dadurch wird die Bildaufnahmegeschwindigkeit reduziert, was insbesondere für die Bildgebung von lebenden Zellen nachteilig ist. Außerdem können Verrechnungs- und/oder Bewegungsartefakte im Bild entstehen.

Um eine Probe mit erhöhter Auflösung zu untersuchen, ist zudem die Mikroskopie mit strukturierter Beleuchtung (SIM) etabliert. Hierbei wird strukturiertes Beleuchtungslicht genutzt, das beispielsweise durch Liniengitter erzeugt werden kann.

Bei einem Laser-Scanning-Mikroskop (LSM) wird als strukturierte Beleuchtung ein Beleuchtungsspot genutzt. Hier wird eine erhöhte Auflösung durch eine konfokale Abbildung erreicht, für die ein Pinhole, also eine Lochblende, in oder an einer Bildebene positioniert ist. Bei einem LSM ist jedoch das Signal-zu-Rausch-Verhältnis vergleichsweise gering, da nur ein verhältnismäßig geringer Lichtanteil genutzt wird.

Zur gleichzeitigen Untersuchung mehrerer Probenbereiche kann ein Mikroskop mit einer Nipkow-Scheibe eingesetzt werden. Diese umfasst mehrere Pinholes, die als archimedische Spiralen angeordnet sind. Solche Mikroskope sind in US 5,428,475 A und US 2008/0218849 A1 beschrieben.

Durch Anordnung der Nipkow-Scheibe im gemeinsamen Beleuchtungs- und Detektionsstrahlengang wird außerfokales Licht gefiltert. Eine schnelle Bildaufnahme kann mit diesem verhältnismäßig einfachen Aufbau durch Rotieren der Nipkow-Scheibe erreicht werden. Diese wird daher auch als Spinning-Disk bezeichnet. Das gleichzeitige Durchleuchten mehrerer Pinholes der Nipkow-Scheibe, eine sogenannte Multi-Spot-Untersuchung, kann die Probenuntersuchung weiter beschleunigen. Ein Mikroskop mit diesem Aufbau ist in EP 1 359 452 A1 beschrieben. Um einen größeren Anteil des Beleuchtungslichts durch die Pinholes der Nipkow-Scheibe zu leiten, wird dabei eine Mikrofokussierlinsenscheibe genutzt. Diese wird gemeinsam mit der Nipkow-Scheibe rotiert. Probenlicht wird ebenfalls durch diese Mikrofokussierlinsenscheibe geleitet und anschließend mit einer weiteren Mikrofokussierlinsenscheibe in Richtung eines Detektors geleitet.

Der Bereich der optischen Grenzauflösung kann bei solchen bekannten Spinning-Disk-Mikroskopen nur mit schlechtem Signal-zu-Rausch-Verhältnis erreicht werden. Als **Aufgabe** der Erfindung kann angesehen werden, ein Lichtmikroskop und ein Mikroskopieverfahren bereitzustellen, bei denen eine möglichst hohe Messauflösung bei kurzen Messzeiten in kostengünstiger Weise ermöglicht wird.

Die Aufgabe wird durch ein Lichtmikroskop mit den Merkmalen des Anspruchs 1 und ein Mikroskopieverfahren mit den Merkmalen des Anspruchs 14 gelöst.

Bevorzugte Ausführungsvarianten des erfindungsgemäßen Verfahrens und des erfindungsgemäßen Lichtmikroskops sind Gegenstand der abhängigen Ansprüche und werden in der folgenden Beschreibung, insbesondere im Zusammenhang mit den Figuren, erläutert.

Das Lichtmikroskop der oben genannten Art ist erfindungsgemäß dadurch gekennzeichnet, dass eine Abtasteinrichtung mit mindestens einer ersten und einer zweiten Optikanordnung vorhanden ist. Die Optikanordnungen der Abtasteinrichtung sind gleichzeitig in eine gemeinsame Richtung bewegbar zum Erzeugen einer Beleuchtungsabtastbewegung und einer Detektionsabtastbewegung, weiche zueinander entgegengesetzt sind. Dabei ist die Beleuchtungsabtastbewegung eine Abtastbewegung von Beleuchtungslicht über die Probenebene und als Detektionsabtastbewegung sind Empfangsbereiche der Detektorelemente über die Probenebene bewegbar. Die erste und die zweite Optikanordnung weisen jeweils mehrere nebeneinander angeordnete optische Elemente auf, mit denen voneinander beabstandete Probenbereiche gleichzeitig untersuchbar sind. Dabei sind die erste und die zweite Optikanordnung so angeordnet sind, dass sowohl ein Strahlengang des Probenlichts von der Probenebene zur Detektoreinrichtung als auch ein Strahlengang des Beleuchtungslichts von der Lichtquelle zu der Probenebene über die erste Optikanordnung verlaufen und nur einer dieser beiden Strahlengänge über die zweite Optikanordnung verläuft. Zum Erreichen einer Richtung der Detektionsabtastbewegung, welche entgegengesetzt zur Richtung der Beleuchtungsabtastbewegung ist, ist mit den Optikanordnungen der Abtasteinrichtung Probenlicht nicht invertierend und mit einem Abbildungsmaßstab von kleiner eins abbildbar.

Das Mikroskopieverfahren der vorgenannten Art ist erfindungsgemäß dadurch gekennzeichnet, dass Optikanordnungen einer Abtasteinrichtung gleichzeitig in eine gemeinsame Richtung bewegt werden zum Erzeugen einer Beleuchtungsabtastbewegung und einer Detektionsabtastbewegung, welche zueinander entgegengesetzt sind. Als Detektionsabtastbewegung werden Empfangsbereiche der Detektorelemente über die Probenebene bewegt. Mit der ersten und der zweiten Optikanordnung, welche jeweils mehrere nebeneinander angeordnete optische Elemente aufweisen, werden voneinander beabstandete Probenbereiche gleichzeitig untersucht, wobei die erste und die zweite Optikanordnung so angeordnet sind, dass über die erste Optikanordnung Beleuchtungslicht und Probenlicht geleitet werden und dass über die zweite Optikanordnung nur entweder Beleuchtungslicht zur Probenebene hin oder Probenlicht zur Detektoreinrichtung hin geleitet wird. Zum Erreichen einer Richtung der Detektionsabtastbewegung, welche entgegengesetzt zur Richtung der Beleuchtungsabtastbewegung ist, wird mit den Optikanordnungen der Abtasteinrichtung Probenlicht nicht invertierend und mit einem Abbildungsmaßstab von kleiner eins abgebildet.

Bevorzugt wird das erfindungsgemäße Mikroskopieverfahren mit einem erfindungsgemäßen Mikroskop durchgeführt.

Zum gleichzeitigen Untersuchen verschiedener Probenbereiche wird hierbei das Beleuchtungslicht von optischen Elementen der ersten und/oder zweiten Optikanordnung in Teilstrahlenbündel gespalten, welche auf voneinander beabstandete Probenbereiche geleitet werden. Von den beleuchteten Pröbenbereichen wird Probenlicht abgegeben. Dieses wird als Teilstrahlenbündel von den optischen Elementen der ersten und/oder zweiten Optikanordnung zur Detektoreinheit weitergeleitet.

Der Probenbereich, aus dem ein bestimmtes Detektorelement die größte Lichtmenge empfängt, hängt von der Position des Beleuchtungsmusters oder Beleuchtungsspots auf der Probe ab. Dies wurde mit Bezug auf Fig. 1 näher erläutert. Durch die Beleuchtungsabtastbewegung wird das Beleuchtungsmuster auf der Probe verschoben. Dadurch verschiebt sich auch die Gesamt-PSF und somit der Probenbereich, aus dem ein bestimmtes Detektorelement die größte Lichtmenge empfängt.

Als ein wesentlicher Vorteil kann durch die Detektionsabtastbewegung erreicht werden, dass ein bestimmtes Detektorelement Licht hauptsächlich aus stets demselben Probenbereich empfängt. Der Ort des Maximums der Gesamt-PSF wird durch die Beleuchtungs- und Detektionsabtastbewegung also möglichst kaum verändert. Hierzu muss die Detektionsabtastbewegung entgegengesetzt zur Beleuchtungsabtastbewegung sein und muss gleichzeitig mit dieser erfolgen.

Die Wirkung der entgegengesetzten Bewegung zwischen der Detektionsabtastbewegung und der Beleuchtungsabtastbewegung wird mit Bezug auf Fig. 1 erläutert. In der dargestellten Situation empfängt das Detektorelement 64 hauptsächlich Licht aus dem Bereich 61A. Hier hat die Gesamt-PSF ihr Maximum. Als Beleuchtungsabtastbewegung wird sodann der Beleuchtungsspot 44 in Richtung des Pfeils 81 bewegt, beispielsweise bis dessen Maximum an der Position 44C liegt. Gleichzeitig wird als Detektionsabtastbewegung der Empfangsbereich des Detektionselements 64 in die entgegengesetzte Richtung bewegt, also in Pfeilrichtung 82. Der Empfangsbereich des Detektionselements 64 kann als Ausdehnung von dessen PSF 46 bis zu den ersten Minima der PSF 46 angesehen werden. Wird diese so weit in Pfeilrichtung 82 bewegt, bis ihr Maximum an der Position 61C liegt, so befindet sich das Maximum der Gesamt-PSF des Detektorelements 64 weiterhin an der Position 61A. Hierdurch kann vorteilhafterweise das zum Stand der Technik beschriebene Umsortieren vermieden werden, bei welchem die Empfangssignale eines bestimmten Detektorelements abhängig von der Position des Beleuchtungsspots verschiedenen Probenpositionen zugeordnet werden.

Eine Richtungsangabe der Beleuchtungsabtastbewegung entspricht der Richtung, in welche sich die Teillichtbündel des Beleuchtungslichts auf der Probe bewegen.

Die Detektionsabtastbewegung ist eine Bewegung des Empfangsbereichs eines bestimmten Detektorelements in der Probenebene. Der Empfangsbereich eines Detektorelements ist derjenige Bereich in der Probenebene, aus dem das Detektorelement Licht empfängt. Der Empfangsbereich ist bestimmt durch die PSF der Abbildung zwischen Probenebene und Bildebene sowie durch die Abmessungen des zugehörigen Detektorelements. Ein Empfangsbereich kann auch als Abbildung des zugehörigen Detektorelements in die Probenebene aufgefasst werden.

Die Beleuchtungsabtastbewegung und die Detektionsabtastbewegung sind dann entgegengesetzt, wenn in der Probenebene die Empfangsbereiche der Detektorelemente entgegengesetzt zu den Teilstrahlenbündeln des Beleuchtungslichts bewegt werden.

Indem kein Umsortieren der aufgenommenen Signale mehr erforderlich ist, weist bereits ein einziges von der Detektoreinrichtung ausgegebenes Bild eine erhöhte Auflösung mit gutem Signal-zu-Rausch-Verhältnis auf. Zudem ist außerfokales Probenlicht reduziert.

Als eine wesentliche Idee der Erfindung kann die Bereitstellung von Optikanordnungen erachtet werden, welche bei einer gemeinsamen Bewegung in eine gemeinsame Richtung eine Beleuchtungsabtastbewegung und eine dazu entgegengesetzte Detektionsabtastbewegung erzeugen. Hierfür ist zunächst erforderlich, dass nicht alle Optikanordnungen sowohl zum Beleuchten der Probe als auch zum Nachweisen von Probenlicht genutzt werden. Vielmehr leitet nur eine der Optikanordnungen sowohl Probenlicht in Richtung der Detektoreinrichtung als auch Beleuchtungslicht in Richtung der Probenebene. Diese Optikanordnung kann zweckmäßigerweise die erste Optikanordnung sein, welche im Strahlengang näher zur Probenebene angeordnet ist als die zweite Optikanordnung. Die zweite Optikanordnung wird hingegen bei einer Ausführungsform allein zum Leiten von Beleuchtungslicht auf die erste Optikanordnung und weiter zur Probenebene genutzt. Hingegen gelangt Probenlicht hier nicht auf die zweite Optikanordnung oder jedenfalls nicht Probenlicht, welches zur Detektoreinrichtung geleitet wird.

Bei einer anderen Ausführungsform wird die zweite Optikanordnung allein zum Leiten von Probenlicht zur Detektoreinrichtung hin genutzt, während Beleuchtungslicht auf dem Weg zur Probenebene nicht auf die zweite Optikanordnung geleitet wird.

Es ist weiterhin erforderlich, dass mit den Optikanordnungen Probenlicht nicht invertierend und mit einem Abbildungsmaßstab von < 1 abgebildet wird. Vorteilhafterweise entfällt dann das Erfordernis einer aufwändigen Abstimmung zwischen der Beleuchtungsabtastbewegung und der Detektionsabtastbewegung.

Wesentliche Geschwindigkeitsvorteile werden bei der Erfindung auch dadurch erreicht, dass mehrere räumlich voneinander getrennte Probenbereiche gleichzeitig untersucht werden können. Hierzu weisen die Optikanordnungen jeweils mehrere optische Elemente auf. Beleuchtungslicht wird sodann gleichzeitig auf mehrere optische Elemente der ersten Optikanordnung gestrahlt. Jedes der bestrahlten optischen Elemente leitet dann ein Teilstrahlenbündel weiter. Die verschiedenen Teilstrahlenbündel werden auf einander nicht überlappende Probenbereiche geleitet. Somit wird eine Multi-Spot-Beleuchtung bereitgestellt. Durch Bewegen der für das Beleuchtungslicht genutzten Optikanordnungen werden die Teilstrahlenbündel verschoben, womit die Beleuchtungsabtastbewegung erzeugt wird.

Über die optischen Elemente der für das Probenlicht genutzten Optikanordnungen werden mehrere, einander nicht überlappende Probenbereiche auf verschiedene Bereiche der Detektoreinrichtung abgebildet. Die Anzahl gleichzeitig untersuchter Probenbereiche entspricht dabei gerade der Anzahl an optischen Elementen der ersten Optikanordnung, welche gleichzeitig vom Beleuchtungslicht bestrahlt wird.

Bevorzugt sind die Geschwindigkeiten der Detektionsabtastbewegung und der Beleuchtungsabtastbewegung betragsmäßig gleich groß. Dies wird durch den Abbildungsmaßstab bestimmt, mit dem die Optikanordnungen Probenlicht abbilden. Für betragsgleiche Geschwindigkeiten beträgt der Abbildungsmaßstab 1:2.

Sämtliche Optikanordnungen der Abtasteinrichtung, über die das Probenlicht zur Detektoreinrichtung läuft, erzeugen gemeinsam eine nicht invertierte Abbildung. Insbesondere wenn genau zwei Optikanordnungen für das Probenlicht genutzt werden, können zum nicht invertierten Abbilden die optischen Elemente von der ersten oder zweiten Optikanordnung jeweils eine lichtsammelnde Wirkung haben und die optischen Elemente der anderen Optikanordnung jeweils eine lichtzerstreuende Wirkung haben. Wird Probenlicht über beide Optikanordnungen zur Detektoreinrichtung geleitet, können die optischen Elemente der ersten Optikanordnung jeweils eine lichtsammelnde Wirkung haben und die optischen Elemente der zweiten Optikanordnung jeweils eine lichtzerstreuende Wirkung. Somit können die optischen Elemente der ersten Optikanordnung mit den zugehörigen optischen Elementen der zweiten Optikanordnung jeweils ein Galilei-Teleskop bilden. Unter zugehörigen optischen Elementen verschiedener Optikanordnungen sollen jeweils solche optischen Elemente verstanden werden, die dasselbe Teilstrahlenbündel des Probenlichts weiterleiten.

Wird das Probenlicht allein über die erste Optikanordnung zur Detektoreinrichtung geleitet, können die optischen Elemente der ersten Optikanordnung lichtzerstreuende Wirkung haben. Somit kann eine nicht invertierte, virtuelle Abbildung des Probenlichts erreicht werden. Das Beleuchtungslicht kann in diesem Fall als paralleles Strahlenbündel auf optische Elemente der zweiten Optikanordnung und weiter zur ersten Optikanordnung geleitet werden. Die optischen Elemente der zweiten Optikanordnung können eine lichtsammelnde Wirkung haben und eine Brennweite, die kürzer ist als die der lichtzerstreuenden optischen Elemente der ersten Optikanordnung. Dadurch wird Beleuchtungslicht in eine Zwischenbildebene fokussiert.

Die Abtasteinrichtung kann auch weitere Optikanordnungen aufweisen, welche im Strahlengang des Probenlichts angeordnet sind und gleichzeitig in eine gemeinsame Richtung bewegbar sind. So können als dritte Optikanordnung ein oder mehrere Bildfelddreher vorhanden sein, beispielsweise Abbe-König-Prismen. Mit der ersten Optikanordnung oder mit der ersten und zweiten Optikanordnung können in diesem Fall invertierte Abbildungen erzeugbar sein, welche durch die Bildfelddrehung des oder der Bildfelddreher in nicht invertierte Abbildungen überführbar sind.

Zudem kann die Abtasteinrichtung als Bildfelddreher eine dritte und eine vierte Optikanordnung aufweisen, welche jeweils ein optisches Element für jedes der optischen Elemente der ersten Optikanordnung aufweisen. Beispielsweise können die optischen Elemente der dritten Optikanordnung zusammen mit den jeweils zugehörigen optischen Elementen der vierten Optikanordnung Kepler-Teleskope bilden. Diese erzeugen eine invertierte Abbildung und dienen so als Bildfelddreher. Verläuft der Strahlengang des Probenlichts von der Probenebene zur Detektoreinrichtung über die erste und die zweite Optikanordnung, so können die optischen Elemente der ersten Optikanordnung gemeinsam mit den zugehörigen optischen Elementen der zweiten Optikanordnung ebenfalls jeweils als Kepler-Teleskop ausgeführt sein. Insbesondere in diesem Fall haben die optischen Elemente der ersten und zweiten Optikanordnung jeweils eine lichtsammelnde Wirkung.

Durch eine lichtsammelnde Wirkung der optischen Elemente der ersten Optikanordnung können die Teilstrahlenbündel des Beleuchtungslichts in eine Zwischenbildebene fokussiert werden. Hier kann eine Lochblendenanordnung vorgesehen sein. Somit ist zum Erzeugen eines konfokalen Probenbilds zwischen der ersten Optikanordnung und der Probenebene eine Lochblendenanordnung vorhanden, welche gemeinsam mit der ersten und der zweiten Optikanordnung bewegbar ist. Dabei weist die Lochblendenanordnung bevorzugt für jedes optische Element der ersten Optikanordnung jeweils eine Lochblende auf.

Grundsätzlich können die Optikanordnungen der Abtasteinrichtung eine beliebige Form haben. Auch können die optischen Elemente einer Optikanordnung prinzipiell beliebig zueinander positioniert sein und die Bewegungen der Optikanordnungen können in eine beliebige, gemeinsame Richtung erfolgen.

Bevorzugt sind aber die Optikanordnungen jeweils durch eine rotierbare Scheibe ausgeführt. Das Beleuchtungslicht wird auf einen Teil einer der rotierbaren Scheiben geleitet. Die Beleuchtungsabtastbewegung erfolgt dadurch entlang eines Kreissegments und in Rotationsrichtung. Die Detektionsabtastbewegung verläuft entlang eines Kreissegments entgegengesetzt zur Rotationsrichtung.

Um ein synchrones Drehen der rotierbaren Scheiben sicherzustellen, sind die rotierbaren Scheiben vorzugsweise auf einer gemeinsamen Antriebswelle gelagert. Es können auch voneinander verschiedene Antriebswellen vorgesehen sein, welche von einem gemeinsamen Motor angetrieben werden.

Die optischen Elemente können auf den rotierbaren Scheiben spiralförmig angeordnet sein, insbesondere als archimedische Spiralen.

Bei einer alternativen Ausführung ist eine Stelleinrichtung zum linearen Verschieben der Optikanordnungen vorhanden. Hierzu können zum Beispiel piezoelektrische Aktuatoren eingesetzt werden. In diesem Fall können die optischen Elemente einer Optikanordnung auch schachbrettförmig positioniert sein.

Die optischen Elemente der Optikanordnungen können prinzipiell beliebiger Art sein, solange sie eine lichtsammelnde oder lichtzerstreuende Wirkung haben. Die optischen Elemente der verschiedenen Optikanordnungen können beispielsweise jeweils durch mindestens eine Linse, einen Spiegel oder ein lichtbeugendes Element gebildet sein. Als lichtbeugende Elemente können Fresnel-Linsen eingesetzt werden.

Ein verhältnismäßig einfacher Strahlengang kann erreicht werden, wenn sämtliche optischen Elemente durch Linsen gebildet sind. In diesem Fall kann zwischen der ersten und zweiten Optikanordnung ein Strahlteiler angeordnet sein. Dieser leitet Beleuchtungslicht durch die erste Optikanordnung, ohne dass das Beleuchtungslicht zuvor die zweite Optikanordnung durchläuft. Gleichzeitig erlaubt der Strahlteiler, dass von der ersten Optikanordnung kommendes Probenlicht zumindest teilweise zu der zweiten Optikanordnung transmittiert wird.

Die Linsen können als Achromat oder Ashpären ausgeführt sein und prinzipiell auch aus jeweils einer oder mehrerer Linsengruppen bestehen.

Alternativ können die optischen Elemente der ersten Optikanordnung auch Linsen und die der zweiten Optikanordnung Spiegel sein. Von der zweiten Optikanordnung reflektierte Teilstrahlenbündel des Probenlichts können sodann über einen weiteren Strahlteiler in Richtung der Detektoreinrichtung geleitet werden.

Auch für die optischen Elemente der ersten Optikanordnung können Spiegel eingesetzt werden, wenn beispielsweise ein weiterer Strahlteiler vorgesehen wird.

Ein bevorzugter Wert des zuvor beschriebenen Abbildungsmaßstabs der Optikanordnungen beträgt 0,5. Dieser Wert ist besonders geeignet, wenn die PSF, mit der eine punktförmige Lichtquelle in die Probenebene abgebildet wird, und die PSF, mit der ein Probenpunkt abgebildet wird, die gleiche Breite haben. Dies ist beispielsweise bei den Kurven 44 und 46 aus Figur 1 der Fall. Hierdurch sollten die Geschwindigkeiten oder Schrittweiten der Beleuchtung- und der Detektionsabtastbewegung betragsgleich sein. Dies wird gerade durch einen Abbildungsmaßstab der Optikanordnungen der Abtasteinrichtung von 0,5 erreicht. Haben die beiden PSF aber unterschiedliche Breiten oder Formen, kann ein anderer Abbildungsmaßstab bevorzugt sein. Dies kann insbesondere der Fall sein, wenn die Wellenlängen des Probenlichts und des Beleuchtungslichts voneinander verschieden sind, beispielsweise bei Fluoreszenz-Messungen. Allgemeiner wird daher ein Abbildungsmaßstab zwischen 0,3 und 0,7 gewählt. Für besonders präzise Messungen kann der Abbildungsmaßstab auch variabel einstellbar sein. Hierzu kann die Abtasteinrichtung eine Zoomoptikanordnung aufweisen. Diese ist gemeinsam mit der ersten Optikanordnung bewegbar und so angeordnet, dass sie im Betrieb allein vom Probenlicht durchlaufen wird. Die Zoomoptikanordnung kann jeweils eine Zoomoptik pro optisches Element der ersten Optikanordnung aufweisen.

Bei einer bevorzugten Variante des erfindungsgemäßen Mikroskopieverfahrens werden Beleuchtungs- und Detektionsabtastbewegungen während einer Integrationszeit der Detektorelemente durchgeführt. Die Detektorelemente werden für verschiedene Positionen der Optikanordnungen also nicht separat ausgelesen, wie es zum Umsortieren gemäß dem Stand der Technik erforderlich ist. Vielmehr können die Detektorelemente für die Aufnahme eines Probenbilds empfangene Probenlichtsignale durchgängig integrieren, während die Optikanordnungen der Abtasteinrichtung bewegt werden.

Vorteilhafte Varianten des erfindungsgemäßen Verfahrens ergeben sich zudem durch den Betrieb der Ausgestaltungen des erfindungsgemäßen Lichtmikroskops. Dabei sind die Elektronikmittel bevorzugt zur automatischen Ausführung der oben beschriebenen Verfahrensvarianten eingerichtet.

Weitere Merkmale und Vorteile der Erfindung werden im Folgenden in Bezug auf die beigefügten schematischen Figuren beschrieben. Hierin zeigen:
- Fig. 1: das Prinzip der Signalentstehung bei Detektorelementen, deren Abstand zueinander kleiner als ein Airy ist;
- Fig. 2: ein Ausführungsbeispiel eines erfindungsgemäßen Lichtmikroskops;
- Fig. 3: Komponenten einer Ausführung eines erfindungsgemäßen Lichtmikroskops, wobei sich die Abtasteinrichtung in einer bestimmten Position befindet;
- Fig. 4: die Komponenten aus Fig. 3, wobei sich die Abtasteinrichtung in einer anderen Position als bei Fig. 3 befindet;
- Fig. 5: Komponenten einer weiteren Ausführung eines erfindungsgemäßen Lichtmikroskops, wobei sich die Abtasteinrichtung in einer bestimmten Position befindet,
- Fig. 6: die Komponenten aus Fig. 5, wobei sich die Abtasteinrichtung in einer anderen Position als bei Fig. 5 befindet;
- Fig. 7: Komponenten einer wiederum weiteren Ausführung eines erfindungsgemäßen Lichtmikroskops, wobei sich die Abtasteinrichtung in einer bestimmten Position befindet,
- Fig. 8: die Komponenten aus Fig. 7, wobei sich die Abtasteinrichtung in einer anderen Position als bei Fig. 7 befindet.
- Fig. 9, 10: Eine weitere vorteilhafte Ausführung

Gleiche und gleichwirkende Komponenten sind in den Figuren in der Regel mit denselben Bezugszeichen versehen.

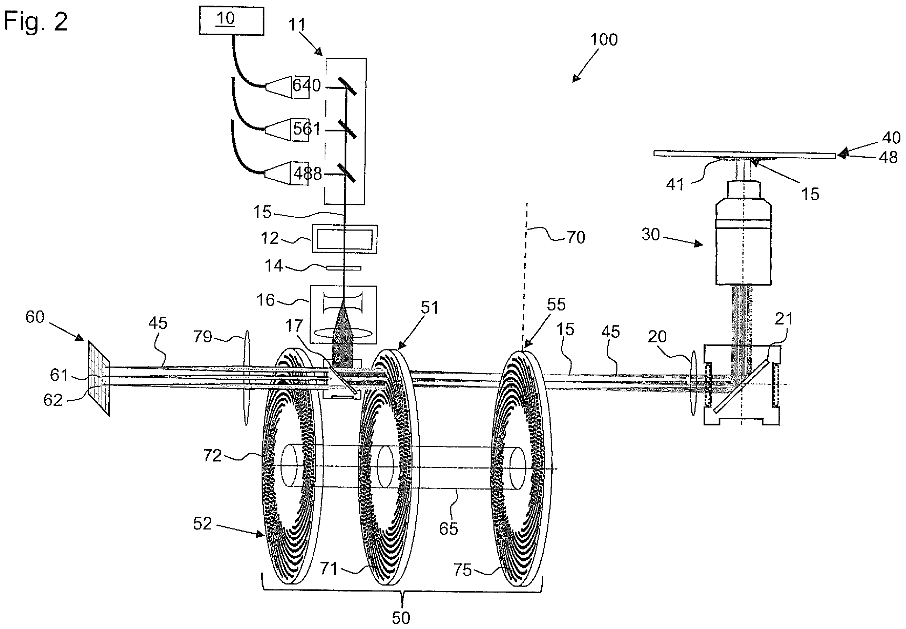

Figur 2 zeigt schematisch ein Ausführungsbeispiel eines erfindungsgemäßen Lichtmikroskops 100. Als wesentliche Komponenten umfasst dieses eine Lichtquelle 10 zum Aussenden von Beleuchtungslicht 15, eine Probenebene 40, in der eine zu untersuchende Probe 41 positionierbar ist, eine Detektoreinrichtung 60 zum Nachweisen von Probenlicht 45 sowie eine Abtasteinrichtung 50.

Mit der Abtasteinrichtung 50 erfolgt eine Beleuchtungsabtastbewegung des Beleuchtungslichts 15 über die Probenebene 40. Zudem werden mit der Abtasteinrichtung 50 Empfangsbereiche in der Probenebene 40 verschoben, aus denen bestimmte Detektorelemente 61, 62 der Detektoreinrichtung Probenlicht empfangen. Diese Bewegung wird als Detektionsabtastbewegung bezeichnet. Durch die spezielle Gestaltung der Abtasteinrichtung 50 sind die Beleuchtungsabtastbewegung und die Detektionsabtastbewegung stets entgegengesetzt zueinander.

Die Lichtquelle 10 kann mehrere Lasermodule umfassen. Von diesen ausgesendetes Beleuchtungslicht wird über optische Fasern zu einer Spiegeltreppe 11 geführt. Durch diese werden die Strahlengänge der Lasermodule in einen gemeinsamen Strahlengang vereint. Sodann wird das Beleuchtungslicht 15 über einen akustooptischen durchstimmbaren Filter (AOTF) 12, einen Polarisationsvariator 14 und ein Teleskop zur Strahlaufweitung 16 zu dem Strahlteiler 17 geleitet.

Insbesondere bei Objektiven mit sehr großer numerischer Apertur wird die Auflösung durch die Polarisation des Beleuchtungslichts beeinflusst. Bei linearer Polarisation wird senkrecht zur Polarisationsrichtung eine höhere Auflösung erreicht als parallel dazu. Bei zirkularer Polarisation in die laterale Auflösung richtungsunabhängig und mittelhoch. Mit dem Polarisationsvariator 14 kann die Polarisation in gewünschter Weise eingestellt werden. Beispielsweise können mehrere Bilder der Probe nacheinander mit verschiedenen Polarisationsrichtungen aufgenommen werden. Diese Bilder können anschließend zu einem einzigen Bild verrechnet werden, das in jede laterale Richtung eine erhöhte Auflösung aufweist.

Durch den Strahlteiler 17 wird zwischen der Probenebene 40 und dem Strahlteiler 17 eine gemeinsame Strahlachse für Beleuchtungs- und Probenlicht erzeugt. Beleuchtungslicht 15 wird am Strahlteiler 17 mindestens teilweise in Richtung der Probenebene 40 reflektiert. Probenlicht 45 wird am Strahlteiler 17 zumindest teilweise in Richtung der Detektoreinrichtung 60 transmittiert. Hierfür kann der Strahlteiler 17 als Neutralteiler ausgeführt sein. Um das intensitätsschwächere Probenlicht nicht unnötig abzuschwächen, transmittiert der Strahlteiler 17 bevorzugt mehr als 60% des auftreffenden Lichts.

Für Fluoreszenzmessungen kann der Strahlteiler 17 auch als Farbteiler ausgeführt sein, welcher wellenlängenabhängig Licht transmittiert oder reflektiert. Alternativ kann der Strahlteiler 17 auch polarisationsabhängig Licht transmittieren oder reflektieren, womit ebenfalls erreicht wird, dass Probenlicht 45 größtenteils transmittiert wird und Beleuchtungslicht 15 größtenteils reflektiert wird. Um Messungen mit Beleuchtungslicht 15 verschiedener Polarisation zu ermöglichen, kann der polarisationsabhängige Strahlteiler 17 auch drehbar sein.

Mit dem Strahlteiler 17 wird Probenlicht 15 auf eine erste Optikanordnung 51 der Abtasteinrichtung 50 geleitet. Die erste Optikanordnung 51 ist hier als rotierende Scheibe ausgeführt und umfasst mehrere optische Elemente 71. Die optischen Elemente 71 sind im dargestellten Beispiel Linsen, welche das Beleuchtungslicht 15 in eine Zwischenbildebene 70 fokussieren. Indem das Beleuchtungslicht 15 auf mehrere optische Elemente 71 trifft, wird das Beleuchtungslicht 15 in Form mehrerer voneinander beabstandeter Teilstrahlenbündel weitergeleitet.

In der Zwischenbildebene 70 ist eine Lochblendenanordnung 55 vorhanden. Diese ist ebenfalls als rotierbare Scheibe ausgeführt und umfasst mehrere Lochblenden 75, durch welche die Teilstrahlenbündel des Beleuchtungslichts 15 geleitet werden. Die Größe der Lochblenden ist so gewählt, dass die fokussierten Teilstrahlenbündel des Beleuchtungslichts 15 vollständig hindurchtreten können oder am Rand beschnitten werden.

Ein Muster des Beleuchtungslichts 15 in der Zwischenbildebene 70 wird sodann in die Probenebene 40 abgebildet. Hierzu sind im dargestellten Beispiel eine Tubuslinse 20, Strahlumlenkungsmittel 21 und ein Objektiv 30 vorhanden. Der Maßstabsfaktor, der durch die Brennweiten der Tubuslinse 20 und des Objektivs 30 bestimmt ist, kann entsprechend der beabsichtigten Untersuchung prinzipiell beliebig gewählt werden.

Mit einer Probenverschiebeeinheit 48 kann eine Probe 41 in der Probenebene 40 und/oder senkrecht dazu bewegt werden kann.

Die Probe 41 wird durch Teilstrahlenbündel des Beleuchtungslichts 15 beleuchtet und gibt als Folge Probenlicht 45 ab. Bei diesem kann es sich um gestreutes Beleuchtungslicht oder um Lumineszenzlicht handeln, also um Fluoreszenz- oder Phosphoreszenzlicht. Das Probenlicht wird vom Objektiv 30 und der Tubuslinse 20 in die Zwischenbildebne 70 abgebildet. Die dort befindlichen Lochblenden 75 lassen Probenlicht 45 aus der Fokusebene der Probe 41 weitgehend hindurch, während sie Probenlicht 45 weitgehend herausfiltern, welches nicht aus der Fokusebene stammt. Der Grad dieser Unterdrückung hängt vom Lochdurchmesser ab.

Das Probenlicht 45 umfasst ebenfalls mehrere Teilstrahlenbündel, die von den verschiedenen beleuchteten Bereichen der Probe 41 ausgehen. Die Anteile der Teilstrahlenbündel des Probenlichts 45, die die Lochblenden 55 passieren, werden mit den Linsen 71 der ersten Optikanordnung 51 kollimiert. Insbesondere können sie als parallele Strahlenbündel durch den Strahlteiler 17 transmittiert und zu optischen Elementen 72 einer zweiten Optikanordnung 52 der Abtasteinrichtung 50 geleitet werden. Die optischen Elemente 72 sind im dargestellten Beispiel Linsen und so positioniert, dass jedes Teilstrahlenbündel des Probenlichts 45 auf ein anderes optisches Element 72 trifft.

Die Eigenschaften der optischen Elemente 72 sind entscheidend für die entgegengesetzten Richtungen der Beleuchtungs- und Detektionsabtastbewegung. Dies wird im Späteren näher beschrieben.

Auf die zweite Optikanordnung 52 folgt eine Fokussieroptik 79, mit weicher ein Bild der Probe 41 auf der Detektoreinrichtung 60 erzeugt wird.

Die Detektoreinrichtung 60 umfasst mehrere Detektorefemente 61, 62, wobei jedes Teilstrahlenbündel des Probenlichts 45 auf mehrere Detektorelemente trifft. Manche Detektoreinrichtungen 60 erfordern Dunkelheit während des Auslesens der Detektorelemente. Daher kann der AOTF 12 dazu angesteuert werden, die Intensität des Beleuchtungslichts 15 zu verringern oder auf null zu setzten, wenn die Detektorelemente ausgelesen werden.

Um Beleuchtungslicht 15 nacheinander auf verschiedene Bereiche der Probe 41 zu leiten, werden die erste Optikanordnung 51 und die Lochblendenanordnung 55 gemeinsam rotiert. Das von einem optischen Element 71 ausgehende Teilstrahlenbündel wird in dieser Weise verschoben, was als Beleuchtungsabtastbewegung bezeichnet wird.

Gemeinsam mit der ersten Optikanordnung 51 und der Lochblendenanordnung 55 wird die zweite Optikanordnung 52 in eine gemeinsame Richtung rotiert. Dazu sind diese drei rotierbaren Scheiben 51, 52, 55 auf einer gemeinsamen Antriebswelle 65 mechanisch starr miteinander gekoppelt.

Durch Drehung der Scheiben 51, 52, 55 sowie durch die spezielle Gestaltung der optischen Elemente 71, 72 wird eine Detektionsabtastbewegung erreicht, die aufgrund der Gestaltung der optischen Elemente 71, 72 entgegengesetzt zur Beleuchtungsabtastbewegung ist.

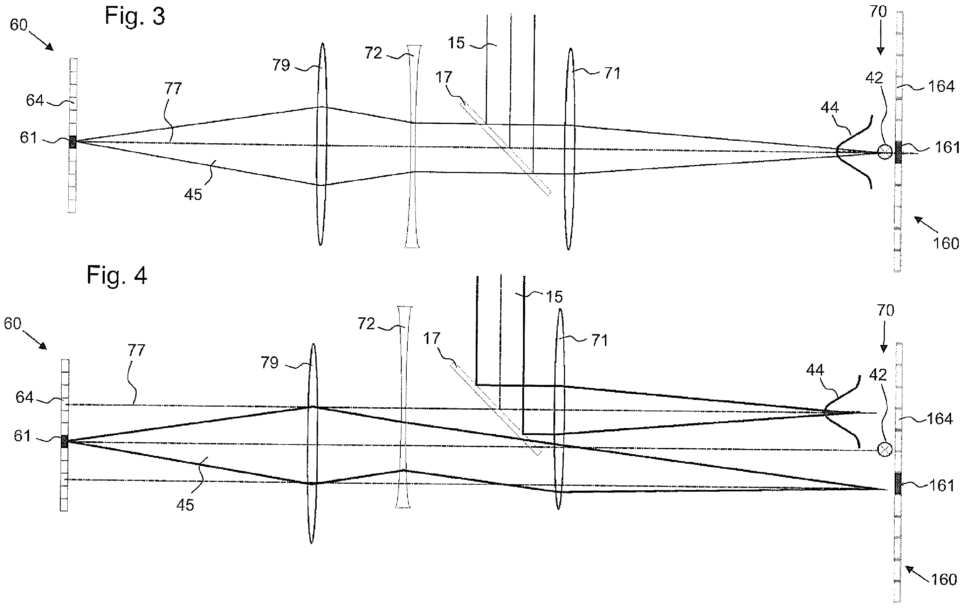

Dies wird näher mit Bezug auf die Figuren 3 und 4 erläutert.

Figur 3 zeigt schematisch Komponenten des Lichtmikroskops aus Figur 2. Dargestellt ist ein Strahlengang des Beleuchtungslichts 15 vom Strahlteiler 17 zur Zwischenbildebene 70 sowie ein Strahlengang des Probenlichts 45 von der Zwischenbildebene 70 zur Detektoreinrichtung 60.

Während die beiden Optikanordnungen 51, 52 eine Vielzahl an optischen Elementen 71 und 72 aufweisen, wie in Figur 2 dargestellt, zeigt Figur 3 allein den Strahlengang für ein Teilstrahlenbündel des Beleuchtungslichts 15 und des Probenlichts 45. Der dargestellte Strahlengang gilt in gleicher Weise für die übrigen optischen Elemente 71, 72, die wie in Figur 2 dargestellt beleuchtet werden.

Es ist zu beachten, dass Figur 3 nicht maßstabsgerecht ist. So ist der Strahlteiler 17 ausreichend groß, dass reflektiertes Beleuchtungslicht 15 vom Strahlteiler 17 auf mehrere nebeneinander angeordnete optische Elemente 71 gelangen kann. Auch die Fokussieroptik 79 ist genügend groß, dass mehrere Teilstrahlenbündel des Beleuchtungslichts 45 mit dieser auf die Detektoreinrichtung 60 geleitet werden können.

Bei der dargestellten Ausführungsform umfasst das optische Element 71 eine Sammellinse und das optische Element 72 eine Zerstreuungslinse. Die Linsen 71, 72 erzeugen ein nicht invertiertes virtuelles Bild der Zwischenebene 70, aus welchem die Fokussieroptik 79 ein reelles Bild auf der Detektoreinrichtung 60 formt. Dabei kann die Fokussieroptik 79 entweder nicht invertiert oder invertiert abbilden.

Durch die Sammellinse 71 wird das Beleuchtungslicht 15, welches als paralleles Strahlenbündel auf die Sammellinse 71 trifft, in die Zwischenbildebene 70 fokussiert. Ein Intensitätsverlauf des Beleuchtungslichts in der Zwischenbildebene 70 ist als Kurve 44 dargestellt. Zudem ist die Abbildung eines Probenpunktes 42 in die Zwischenbildebene 70 gezeigt. In der dargestellten Situation befindet sich das Maximum der Intensitätskurve 44 des Beleuchtungslichts 15 genau am Probenpunkt 42. Weiterhin ist in der Zwischenbildebene 70 eine, hier unendlich scharfe, Abbildung 160 der Detektoreinrichtung 60 dargestellt. Die Detektorelemente 61, 64 werden in der Zwischenbildebene 70 in die Positionen 161 und 164 abgebildet. Das Detektorelement 61 empfängt in dieser Situation folglich hauptsächlich Licht vom Probenpunkt 42.

Figur 4 zeigt die Komponenten aus Figur 3 zu einem anderen Zeitpunkt. Hierbei wurden die optischen Elemente 71, 72 der Abtasteinrichtung in eine gemeinsame Richtung bewegt. Die übrigen Komponenten sind ortsfest.

Indem die Linse 71 von Figur 3 zu Figur 4 nach oben bewegt wurde, ist auch die Intensitätsverteilung 44 des Beleuchtungslichts 15 in der Zwischenebene 70 nach oben verschoben. Demnach liegt das Maximum der Intensitätsverteilung 44 nicht mehr am Probenpunkt 42, sondern oberhalb von diesem. Die Wegstrecke der Verschiebung der Intensitätsverteilung 44 in der Zwischenbildebene 70 ist gleich der Wegstrecke der Bewegung der Linse 71, weil mit dieser das zunächst als paralleles Strahlenbündel verlaufende Beleuchtungslicht 15 auf einen Bereich fokussiert wird, der auf einer zentralen oder optischen Achse 77 der Linse 71 liegt.

Durch die Verschiebung der Linsen 71, 72 wird auch eine Verschiebung der Abbildung der Detektorelemente erreicht. So befindet sich das ortsfeste Detektorelement 61 in Figur 4 unterhalb der zentralen Achse oder optischen Achse 77, welche zentral durch die Linsen 71, 72 verläuft. Weil die Linsen 71, 72 nicht invertierend abbilden, befindet sich eine Abbildung 161 des Detektorelements 61 ebenfalls unterhalb der optischen Achse 77. Die Abbildung 161 oder der Ort 161 kann auch als Mittelpunkt des Empfangsbereichs des Detektorelements 61 aufgefasst werden. Weil eine Abbildung nicht unendlich scharf erzeugt wird, empfängt das Detektorelement 61 auch Licht aus einem ausgedehnten Bereich um den Ort 161. Dieser Empfangsbereich kann als Airy-Scheibe definiert werden, auf welche das Detektorelement 61 in der Zwischenbildebene 70 abgebildet wird.

Würden die Linsen 71, 72 eine Abbildung mit einem Abbildungsmaßstab von 1 erzeugen, so würde das Detektorelement 61 auch in Figur 4 auf den Probenpunkt 42 in der Zwischenbildebene 70 abgebildet werden. Der Abbildungsmaßstab der Linsen 71, 72 ist jedoch kleiner als 1. Dadurch befindet sich in Figur 4 die Abbildung 161 des Detektorelements 61 weiter unterhalb der optischen Achse 77 als das Detektorelement 61. Hierfür kann die lichtzerstreuende Linse 72 eine Brennweite aufweisen, die betragsmäßig halb so groß wie die der lichtsammelnden Linse 71 ist. Die beiden Linsen 71, 72 können auch als Galilei-Teleskop bezeichnet werden.

Werden die Linsen 71, 72 nach oben bewegt, verschiebt sich also ein Empfangsbereich eines bestimmten Detektorelements in der Zwischenbildebene 70 nach unten. Die Verschiebung der Detektorelementabbildung 161, welche auch als Verschiebung des Zentrums des Empfangsbereichs des Detektorelements 61 angesehen werden kann, kann als Detektionsabtastbewegung bezeichnet werden. In Bezug auf den ortsfesten Probenpunkt 42 ist von Figur 3 zu Figur 4 eine Detektionsabtastbewegung nach unten erfolgt, vergleiche Positionen der Abbildungen 161. Die Beleuchtungsabtastbewegung, das heißt die Verschiebung der Intensitätskurve 44, erfolgte hingegen nach oben.

Wie mit Bezug auf Figur 1 erläutert, wird die vom Detektorelement 61 empfangene Lichtintensität durch eine Gesamt-Punktspreizfunktion bestimmt, deren Maximum zwischen der Intensitätskurve 44 des Beleuchtungslichts 15 und dem Ort der Abbildung 161 liegt. Das Maximum der Gesamt-Punktspreizfunktion soll bei einer Beleuchtungsabtastbewegung durch die gleichzeitige Detektionsabtastbewegung möglichst ortsfest sein. Hierzu erzeugen die Linsen 71, 72 bevorzugt eine Abbildung mit einem Maßstab von 1:2. Dadurch sind die Geschwindigkeiten und die zurückgelegten Strecken der Beleuchtungsabtastbewegung und der Detektionsabtastbewegung in der Zwischenbildebene 70 betragsgleich.

Bilden die optischen Elemente 71, 72 mit einem Abbildungsmaßstab von 1:2 ab, so ist jedoch das Probenbild, das von der Detektoreinrichtung 60 während dem Ausführen der Beleuchtungs- und Detektionsabtastbewegungen aufgenommen wird, nicht etwa halb so groß wie das Probenbild in der Zwischenebene 70. Vielmehr ist es gleich groß, solange eine gegebenenfalls vorhandene Fokussieroptik mit einem Maßstab von 1:1 abbildet. Dies ist darin begründet, dass die Zwischenbildebene 70 nicht gleichmäßig mit Beleuchtungslicht ausgeleuchtet wird. Vielmehr hängt der Bereich der Zwischenbildebene 70, aus dem ein bestimmtes Detektorelement die größte Lichtmenge empfängt, auch vom Ort des Beleuchtungsflecks 44 in der Zwischenbildebene 70 ab. Durch die Beleuchtungs- und Detektionsabtastbewegung wird daher bei einem Abbildungsmaßstab von 1:2 erreicht, dass das von der Detektoreinrichtung 60 aufgezeichnete Bild der Probe die gleiche Größe hat wie das Bild der Probe in der Zwischenbildebene 70.

Bei dem erfindungsgemäßen Lichtmikroskop müssen vorteilhafterweise keine optischen Komponenten in entgegengesetzte Richtungen bewegt werden, um entgegengesetzte Richtungen der Beleuchtungsabtastbewegung und der Detektionsabtastbewegung zu erreichen. Vielmehr reicht es bereits, wenn die optischen Elemente 71, 72 mit gleicher Geschwindigkeit in eine gemeinsame Richtung bewegt werden. Daher können mit apparativ einfachen Mitteln hohe Geschwindigkeiten der Abtastbewegungen erreicht werden.

Bei einer Abwandlung der Ausführung aus den Figuren 3 und 4 sind die optischen Elemente 71, 72 mit Spiegeln oder lichtbeugenden Elementen anstelle von Linsen gebildet. Beispielsweise kann das optische Element 71 eine Linse und das optische Element 72 ein Spiegel sein. Vom Spiegel 72 zurückgeworfenes Probenlicht kann in diesem Fall mit einem weiteren Strahlteiler in Richtung der Detektoreinrichtung 60 geleitet werden.

Auch das optische Element 71 kann ein Spiegel sein. Hierbei wird zunächst ein erster Strahlteiler eingesetzt, um Beleuchtungslicht, das vom Spiegel 71 zurückgeworfen wird, zur Probe zu leiten. Probenlicht kann über den ersten Strahlteiler zum Spiegel 71 geleitet werden und sodann mit einem zweiten Strahlteiler in Richtung des optischen Elements 72.

Ein Spiegel 71 kann auch mit einem Loch in der Mitte versehen sein, wodurch die Lochblendenanordnung ersetzt werden kann.

Zudem können die in den Figuren 3 und 4 dargestellten Komponenten auch mit Optikanordnungen verwendet werden, welche nicht als rotierbare Scheiben ausgeführt sind. Vielmehr können beliebige andere ein- oder zweidimensionale Anordnungen von optischen Elementen vorgesehen sein. Diese Anordnungen müssen nicht rotiert werden, sondern können in beliebiger Weise gemeinsam bewegt werden, beispielsweise linear oder in einer zick-zack-Form.

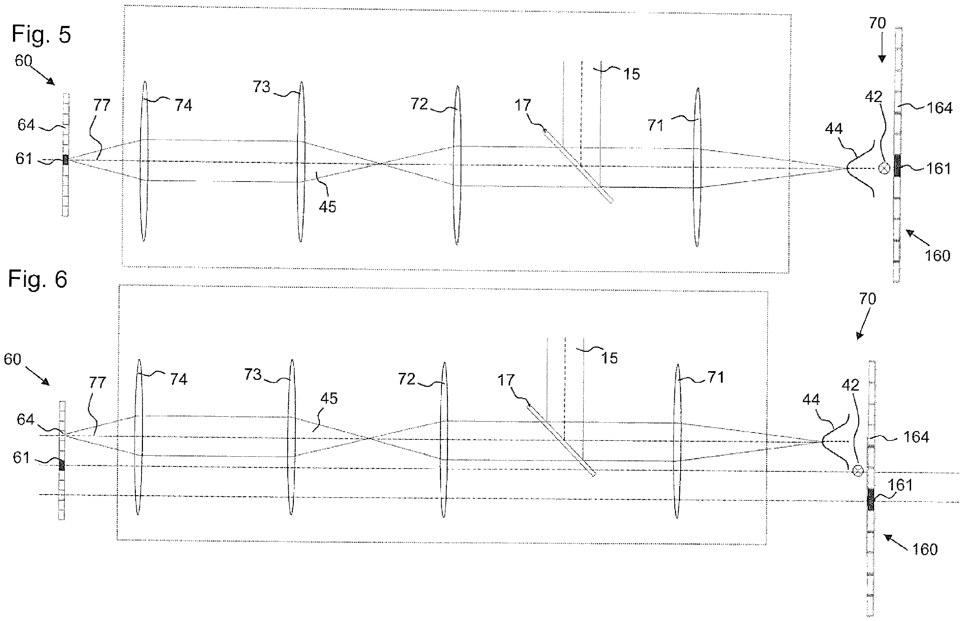

Ein weiteres Ausführungsbeispiel eines erfindungsgemäßen Lichtmikroskops 100 wird mit Bezug auf die Figuren 5 und 6 beschrieben. Das Lichtmikroskop kann dem aus Figur 2 entsprechen, wobei zwischen der Optikanordnung 52 und der Detektoreinrichtung 60 zwei weitere Optikanordnungen mit jeweils mehreren optischen Elementen vorhanden sind. Dabei kann die Fokussieroptik 79 entfallen. Die beiden weiteren Optikanordnungen können wie die erste und zweite Optikanordnung 51, 52 als Scheiben ausgeführt sein, die ebenfalls durch die Antriebswelle 65 gedreht werden können.

Figur 5 zeigt die Strahlengänge eines Teilstrahlenbündels des Beleuchtungslichts 15 und eines Teilstrahlenbündels des Probenlichts 45. Wie auch bei den Figuren 3 und 4 wird hier das Beleuchtungslicht 15 durch eine lichtsammelnde Linse 71 fokussiert. Das Probenlicht 45 wird hier jedoch über die Linsen 71 bis 74 auf die Detektoreinrichtung 60 abgebildet. Die Linsen 71 bis 74 haben jeweils eine lichtsammelnde Wirkung. Dadurch können die Linsen 71, 72 ein erstes Kepler-Teleskop bilden und die Linsen 73, 74 ein zweiten Kepler-Teleskop. Das erste Kepler-Teleskop erzeugt eine invertierte Abbildung, welche vom zweiten Kepler-Teleskop nochmals invertiert abgebildet wird. Im Ergebnis erzeugen daher die optischen Elemente 71 bis 74 der Abtasteinrichtung eine nicht invertierte Abbildung.

Hierin besteht ein fundamentaler Unterschied zu bekannten Mikroskopen, welche zwei Scheiben mit Mikrolinsen-Arrays verwenden. So weisen die beiden Scheiben aus EP 1 359 452 A1 lichtsammelnde Mikrolinsen auf. Dadurch erzeugen die beweglichen Komponenten eine invertierende Abbildung. Zudem ist der Abbildungsmaßstab nicht kleiner 1. Im Gegensatz bilden die beweglichen Komponenten bei der Erfindung nicht invertierend und mit einem Abbildungsmaßstab kleiner 1 ab.

Figur 6 zeigt eine Situation, in der die Linsen 71 bis 74 der Abtasteinrichtung nach oben bewegt wurden. Hierdurch werden eine Beleuchtungsabtastbewegung und eine Detektionsabtastbewegung in der Zwischenbildebene 70 erzeugt. Dabei gelten die Beschreibungen zur Beleuchtungs- und Detektionsabtastbewegung zwischen den Figuren 3 und 4 für das Ausführungsbeispiel der Figuren 5 und 6 entsprechend.

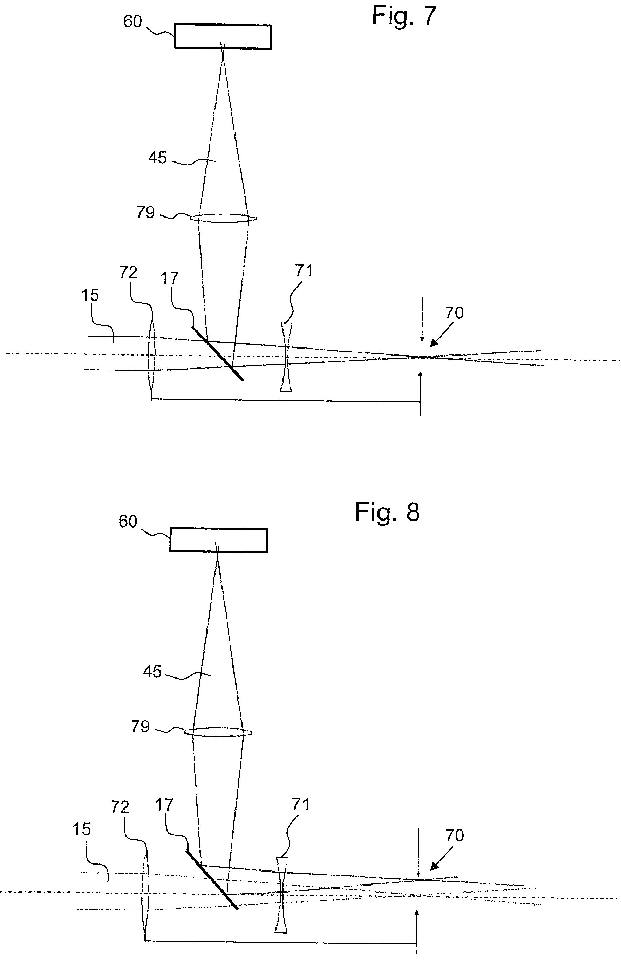

Die Figuren 7 und 8 zeigen ein Ausführungsbeispiel, bei dem Beleuchtungslicht 15 über optische Elemente 72 der zweiten Optikanordnung zu optischen Elementen 71 der ersten Optikanordnung und weiter zur Zwischenbildebene 70 geleitet wird. Das optische Element 72 ist eine Sammellinse und das optische Element 71 ist eine Zerstreuungslinse. Die Zerstreuungslinse 72 erzeugt mit dem Probenlicht 45 eine nicht invertierte, virtuelle Abbildung. Über einen Strahlteiler 17 wird das Probenlicht 45 zur Detektoreinrichtung 60 geleitet, ohne zur Sammellinse 71 zu gelangen. Mit einer ortsfesten Fokussieroptik 79 wird das Probenlicht 45, das heißt die Teilstrahlenbündel des Probenlichts 45, die über die verschiedenen Zerstreuungslinsen 71 geleitet werden, auf die Detektoreinrichtung 60 abgebildet.

Gegenüber Figur 7 sind die Linsen 71, 72 bei Figur 8 nach unten bewegt worden. Die Beleuchtungsabtastbewegung ist damit in der Zwischenbildebene 70 ebenfalls nach unten erfolgt. Es ist erkennbar, dass die Detektionsabtastbewegung hingegen nach oben erfolgt ist.

Wie die Ausführungsformen zeigen, ist die konkrete Anzahl an optischen Elementen 71 bis 74 und daher an Optikanordnungen 51, 52 nicht entscheidend. Vielmehr ist maßgebend, dass die beweglichen optischen Elemente 71 bis 74 der Abtasteinrichtung 50, welche das Probenlicht 45 zur Detektoreinrichtung 60 leiten, eine nicht invertierte Abbildung erzeugen. Diese Abbildung kann virtuell sein, wie bei den Figuren 3 und 4 sowie 7 und 8, oder reell, wie bei den Figuren 5 und 6. Eine gegebenenfalls darauf folgende Abbildung durch eine Fokussieroptik 79 kann invertierend oder nicht invertierend erfolgen.

Zudem muss für das Probenlicht der Abbildungsmaßstab der gesamten Abbildung, die durch die optischen Elemente 71 bis 74 der Abtasteinrichtung erzeugt wird, kleiner 1 sein. Bei einem Abbildungsmaßstab größer 1 würden die Beleuchtungs- und die Detektionsabtastbewegung mit unterschiedlicher Geschwindigkeit in die gleiche Richtung erfolgen. Erst ab einem Abbildungsmaßstab kleiner 1 sind die Richtungen entgegengesetzt. Bevorzugt beträgt der Abbildungsmaßstab 0,5, womit die Beleuchtungs- und die Detektionsabtastbewegung entgegengesetzt und in ihrer Geschwindigkeit betragsgleich sind.

Dadurch können die Detektorelemente ein empfangenes Signal weiter integrieren, während die optischen Elemente der Abtasteinrichtung bewegt werden. Im Gegensatz zum Stand der Technik ist es also nicht mehr erforderlich, für jede Messposition der optischen Elemente der Abtasteinrichtung die Detektorelemente separat auszulesen. Insbesondere können die Detektorelemente solange durchgängig integrieren, bis mit allen optischen Elementen der Optikanordnungen eine Abtastung abgeschlossen ist. Das anschließend ausgelesene Bild oder Rohbild hat eine besonders hohe Auflösung, ohne dass weitere Verrechnungsmaßnahmen erforderlich sind.

Vorteilhafterweise kann daher das Umsortieren der empfangenen Signale, das mit Bezug auf den Stand der Technik beschreiben wurde, entfallen. Somit kann in besonders kurzer Zeit ein hochauflösendes Bild der Probe aufgenommen werden.

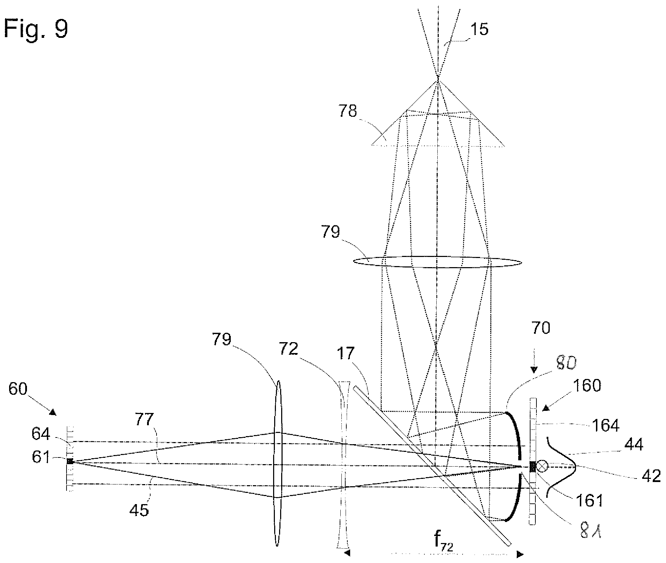

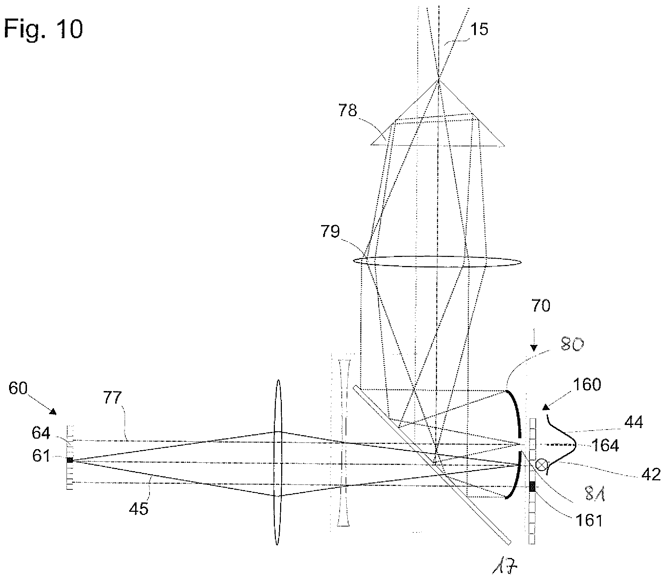

Bei einer weiteren Ausführungsform gemäß Fig. 9 und 10 wird das durch eine (nicht dargestellte Optik) auf einen Punkt konzentrierte Beleuchtungslicht 15 durch die abgeflachte Spitze eines Retroreflektor-Prismas 78 in die Anordnung eingekoppelt. Das vom Einkoppelpunkt ausgehende, divergente Licht wird von einem Strahlteiler 17 nach Kollimation durch 79 abgelenkt. Auf dem radialen Bereich der Scheibe, der bei der Drehung vom beleuchteten Feld überstrichen wird, befindet sich eine Anordnung fokussierender Mikrospiegel (schematisch dargestellt), deren Zentrum jeweils eine das Licht durchlassende Öffnung 81 aufweist. Ein kleiner Teil des auf jeden der Mikrospiegel fallenden Lichts (entsprechend der Fläche der Durchgangsöffnung im Verhältnis zur Gesamtfläche des jeweiligen Hohlspiegels) passiert den Spiegel durch diese Öffnung bereits beim ersten Auftreffen und gelangt von dort über den Mikroskopstrahlengang auf die Probe (nicht dargestellt). Der größte Teil des Lichtes wird durch die Mikrohohlspiegel 80 jedoch zurückreflektiert, wobei in der Brennebene der Mikrohohlspiegel ein sich mit der Scheibe drehendes Fokusmuster entsteht. Da das Fokusmuster in oder nahe der (vorderen) Brennebene der Optik 79 liegt, wird es von dieser ins Unendliche abgebildet und gelangt zum Prisma 78, wo es neuerlich reflektiert wird. Die nicht reflektierende, abgeflachte Spitze des Prismas 78 entspricht dabei dem Abbild der zentralen Öffnung eines jeden der Mikrohohlspiegel 80.

[Befände sich das Prisma 78, mit seiner abgeflachten Spitze exakt in der (hinteren) Brennebene der Optik 79, würde der Strahl, der auf dem gleichen Weg über Strahlteiler 17 und Optik 79 wieder auf die Mikrospiegel 80 zurückgeschickt wird, dort wieder kollimiert und ein weiteres Mal zurückreflektiert. Wird das Prisma 78 jedoch in geeigneter Weise ein klein wenig aus der Brennebene der Optik 79 herausgerückt, fallen die telezentrischen Foci jeweils auf die transparenten Durchgangsöffnungen im Zentrum der Mikrohohlspiegel 80, werden dort durchgelassen und über den Mikroskopstrahlengang als sich drehendes Punktmuster auf die Probe gelenkt. Das von der Probe (durch Reflexion oder Fluoreszenz) zurückgesandte Licht wird durch die Öffnungen 81 räumlich gefiltert vom Strahlteiler 26 durchgelassen und danach mit einer weiteren optischen Anordnung auf den Detektor abgebildet. Die Aufgabe des Prismas 78 kann auch ein Spiegel übernehmen, der dann jedoch nicht in der Brennebene der Optik 79 platziert werden kann (dies würde bedeuten, dass sich die Mikrospiegel und ihr Bild punktgespiegelt relativ zueinander drehen würden), sondern erst hinter einem weiteren Projektiv das in bzw. nahe der Ebene eines Planspiegels ein Bild des sich drehenden Fokusmusters der Mikrospiegel erzeugt. Auch hier muss der Spiegel geringfügig aus der Fokusebene der optischen Anordnung herausbewegt werden, damit das Bild des Fokusmusters der Mikrospiegel 80 in den Durchgangsöffnungen zu liegen kommt. Weiterhin muss eine zur abgeflachten Spitze des Prismas 78 analoge Stelle geschaffen werden, über die der hier nur punktgrosse Beleuchtungsstrahl eingekoppelt werden kann. Analog zur Bewegung der Linsen 71,72 in Fig. 3 und 4 erfolgt gemäß Fig. 9 und Fig. 10 eine Verschiebung der Intensitätsverteilung des Beleuchtungslichtes durch einen gemeinsamen Versatz der Lage des Mikrospiegels 80 und der Mikrozerstreuungslinse 72 senkrecht zur optischen Achse, um eine diametrale Verschiebung zwischen der Abbildung der Detektorelemente und des Beleuchtungslichts zu erreichen.

Bei einer weiteren Ausführungsform gemäß Fig. 9 und 10 wird das durch eine (nicht dargestellte) Optik auf einen Punkt konzentrierte Beleuchtungslicht 15 durch die abgeflachte Spitze eines Retroreflektor-Prismas 78 in die Anordnung eingekoppelt. Das vom Einkoppelpunkt ausgehende, divergente Licht wird von einem Strahlteiler 17 nach Kollimation durch 79 abgelenkt. Auf dem radialen Bereich der Scheibe, der bei der Drehung vom beleuchteten Feld überstrichen wird, befindet sich eine Anordnung fokussierender Mikrospiegel (schematisch dargestellt), deren Zentrum jeweils eine das Licht durchlassende Öffnung 81 aufweist. Ein kleiner Teil des auf jeden der Mikrospiegel fallenden Lichts (entsprechend der Fläche der Durchgangsöffnung im Verhältnis zur Gesamtfläche des jeweiligen Hohlspiegels) passiert den Spiegel durch diese Öffnung bereits beim ersten Auftreffen und gelangt von dort über den Mikroskopstrahlengang auf die Probe (nicht dargestellt). Der größte Teil des Lichtes wird durch die Mikrohohlspiegel 80 jedoch zurückreflektiert, wobei in der Brennebene der Mikrohohlspiegel ein sich mit der Scheibe drehendes Fokusmuster entsteht. Da das Fokusmuster in oder nahe der (vorderen) Brennebene der Optik 79 liegt, wird es von dieser ins Unendliche abgebildet und gelangt zum Prisma 78, wo es neuerlich reflektiert wird. Die nicht reflektierende, abgeflachte Spitze des Prismas 78 entspricht dabei dem Abbild der zentralen Öffnung eines jeden der Mikrohohlspiegel 80.

Befände sich das Prisma 78 mit seiner abgeflachten Spitze exakt in der (hinteren) Brennebene der Optik 79, würde der Strahl, der auf dem gleichen Weg über Strahlteiler 17 und Optik 79 wieder auf die Mikrospiegel 80 zurückgeschickt wird, dort wieder kollimiert und ein weiteres Mal zurückreflektiert. Wird das Prisma 78 jedoch in geeigneter Weise ein klein wenig aus der Brennebene der Optik 79 herausgerückt, fallen die telezentrischen Foki jeweils auf die transparenten Durchgangsöffnungen im Zentrum der Mikrohohlspiegel 80, werden dort durchgelassen und über den Mikroskopstrahlengang als sich drehendes Punktmuster auf die Probe gelenkt. Das von der Probe (durch Reflexion oder Fluoreszenz) zurückgesandte Licht wird durch die Öffnungen 81 räumlich gefiltert vom Strahlteiler 26 durchgelassen und danach mit einer weiteren optischen Anordnung auf den Detektor abgebildet. Die Aufgabe des Prismas 78 kann auch ein Spiegel übernehmen, der dann jedoch nicht in der Brennebene der Optik 79 platziert werden kann (dies würde bedeuten, dass sich die Mikrospiegel und ihr Bild punktgespiegelt relativ zueinander drehen würden), sondern erst hinter einem weiteren Projektiv das in bzw. nahe der Ebene eines Planspiegels ein Bild des sich drehenden Fokusmusters der Mikrospiegel erzeugt. Auch hier muss der Spiegel geringfügig aus der Fokusebene der optischen Anordnung herausbewegt werden, damit das Bild des Fokusmusters der Mikrospiegel 80 in den Durchgangsöffnungen zu liegen kommt.

Weiterhin muss eine zur abgeflachten Spitze des Prismas 78 analoge Stelle geschaffen werden, über die der hier nur punktgrosse Beleuchtungsstrahl eingekoppelt werden kann.

Analog zur Bewegung der Linsen 71,72 in Fig. 3 und 4 erfolgt gemäß Fig. 9 und Fig. 10 eine Verschiebung der Intensitätsverteilung des Beleuchtungslichtes durch einen gemeinsamen Versatz der Lage des Mikrospiegels 80 und der Mikrozerstreuungslinse 72 senkrecht zur optischen Achse, um eine diametrale Verschiebung zwischen der Abbildung der Detektorelemente und des Beleuchtungslichts zu erreichen.

### Bezugszeichenliste

- 10: Lichtquelle
- 11: Spiegeltreppe mit teildurchlässigen Spiegeln oder Farbteilen
- 12: akustooptischer durchstimmbarer Filter (AOTF)
- 14: Polarisationsvariator
- 15: Beleuchtungslicht
- 16: Teleskop zur Strahlaufweitung
- 17: Strahl- oder Farbteiler
- 20: Tubuslinse
- 21: Umlenkmittel
- 30: Objektiv
- 40: Probenebene
- 41: Probe
- 42: Probenpunkt, fluoreszierendes Objekt der Probe
- 44: Intensitätsverteilung eines Beleuchtungsflecks
- 44A-44D: verschiedene Positionen der Intensitätsverteilung 44 des Beleuchtungslichts
- 45: Probenlicht
- 46: Kurve der Empfangsempfindlichkeit eines Detektorelements
- 48: Probenverschiebeeinheit
- 50: Abtasteinrichtung
- 51: erste Optikanordnung
- 52: zweite Optikanordnung
- 55: Lochblendenanordnung
- 60: Detektoreinrichtung
- 61-64: Detektorelemente
- 61A - 61D: Positionen der in die Probenebene abgebildeten Detektorelemente
- 65: Antriebswelle
- 70: Zwischenbildebene
- 71: optisches Element der ersten Optikanordnung
- 72: optisches Element der zweiten Optikanordnung
- 73: optisches Element der dritten Optikanordnung
- 74: optisches Element der vierten Optikanordnung
- 75: Lochblende
- 77: optische Achse der optischen Elemente der Abtasteinrichtung
- 78: Retroreflektor- Prisma
- 79: Fokussieroptik
- 80: Mikrospiegelanordnung
- 81: Öffnung im Mikrospiegel
- 100: Lichtmikroskop
- 160: Abbildung der Detektoreinrichtung 60
- 161: Abbildung des Detektorelements 61
- 164: Abbildung des Detektorelements 64

## Patentansprüche

1. Lichtmikroskop
mit einer Probenebene (40), in welcher eine zu untersuchende Probe (41) positionierbar ist,
mit einer Lichtquelle (10) zum Aussenden von Beleuchtungslicht (15),
mit optischen Abbildungsmitteln (16, 17, 20, 21, 30) zum Leiten des Beleuchtungslichts (15) in die Probenebene (40) und
mit einer Detektoreinrichtung (60), welche zum Nachweisen von Probenlicht (45), das von der Probe (41) kommt, mehrere Detektorelemente (61 - 64) aufweist,
wobei benachbarte Detektorelemente (63, 64) zueinander einen Abstand aufweisen, der kleiner ist als eine Airy-Disk, den ein Punkt der Probenebene (40) auf der Detektoreinrichtung (60) erzeugt,
**dadurch gekennzeichnet,**
**dass** eine Abtasteinrichtung (50) mit mindestens einer ersten und einer zweiten Optikanordnung (51, 52) vorhanden ist,
**dass** die Optikanordnungen (51, 52) der Abtasteinrichtung (50) gleichzeitig in eine gemeinsame Richtung bewegbar sind zum Erzeugen einer Beleuchtungsabtastbewegung (81) und einer Detektionsabtastbewegung (82), welche zueinander entgegengesetzt sind,
wobei die Beleuchtungsabtastbewegung (81) eine Abtastbewegung von Beleuchtungslicht (15) über die Probenebene (40) ist und
wobei als Detektionsabtastbewegung (82) Empfangsbereiche der Detektorelemente (61 - 64) über die Probenebene (40) bewegbar sind,
**dass** die erste und die zweite Optikanordnung (51, 52) jeweils mehrere nebeneinander angeordnete optische Elemente (71, 72) aufweisen, mit denen voneinander beabstandete Probenbereiche gleichzeitig untersuchbar sind, indem die optischen Elemente (71, 72) der ersten und/oder der zweiten Optikanordnung (51, 52) das Beleuchtungslicht in Teilstrahlenbündel spalten,
**dass** die erste und die zweite Optikanordnung (51, 52) so angeordnet sind,
**dass** sowohl ein Strahlengang des Probenlichts (45) von der Probenebene (40) zur Detektoreinrichtung (60) als auch ein Strahlengang des Beleuchtungslichts (15) von der Lichtquelle (10) zu der Probenebene (40) über die erste Optikanordnung (51) verlaufen und nur einer dieser beiden Strahlengänge über die zweite Optikanordnung (52) verläuft und
**dass** zum Erreichen einer Richtung der Detektionsabtastbewegung (82), welche entgegengesetzt zur Richtung der Beleuchtungsabtastbewegung (81) ist, mit der Abtasteinrichtung (50) Probenlicht (45) nicht invertierend und mit einem Abbildungsmaßstab von kleiner eins abgebildet wird.

2. Lichtmikroskop nach Anspruch 1,
**dadurch gekennzeichnet,**
**dass** der Abbildungsmaßstab 1:2 beträgt.

3. Lichtmikroskop nach Anspruch 1 oder 2,
**dadurch gekennzeichnet,**
**dass** zum nicht invertierten Abbilden die optischen Elemente (71; 72) von der ersten oder zweiten Optikanordnung (51; 52) jeweils eine lichtsammelnde Wirkung haben und die optischen Elemente (72; 71) der anderen Optikanordnung (52; 51)jeweils eine lichtzerstreuende Wirkung haben.

4. Lichtmikroskop nach Anspruch 1 oder 2,
**dadurch gekennzeichnet,**
**dass** die Abtasteinrichtung (50) eine dritte Optikanordnung aufweist, welche einen oder mehrere Bildfelddreher umfasst und im Strahlengang des Probenlichts (45) angeordnet ist,
**dass** mit der ersten Optikanordnung (51) oder mit der ersten und zweiten Optikanordnung (51, 52) invertierte Abbildungen erzeugbar sind, welche durch die Bildfelddrehung des oder der Bildfelddreher in nicht invertierte Abbildungen überführbar sind.

5. Lichtmikroskop nach Anspruch 4,
**dadurch gekennzeichnet,**
**dass** die Abtasteinrichtung (50) als Bildfelddreher eine dritte und eine vierte Optikanordnung aufweist, welche jeweils ein optisches Element (73, 74) für jedes der optischen Elemente (71) der ersten Optikanordnung (51) aufweisen.

6. Lichtmikroskop nach Anspruch 4 oder 5,
**dadurch gekennzeichnet,**
**dass** der Strahlengang des Probenlichts (45) von der Probenebene (40) zur Detektoreinrichtung (60) über die erste und die zweite Optikanordnung (51, 52) verläuft und
**dass** die optischen Elemente (71, 72) der ersten und zweiten Optikanordnung (51, 52) jeweils eine lichtsammelnde Wirkung haben.

7. Lichtmikroskop nach einem der Ansprüche 1 bis 6,
**dadurch gekennzeichnet,**
**dass** zum Erzeugen eines konfokalen Probenbilds zwischen der ersten Optikanordnung (51) und der Probenebene (40) eine Lochblendenanordnung (55) vorhanden ist, welche gemeinsam mit der ersten und zweiten Optikanordnung (51, 52) bewegbar ist, und
**dass** die Lochblendenanordnung (55) für jedes optische Element (71) der ersten Optikanordnung (51) jeweils eine Lochblende (75) aufweist.

8. Lichtmikroskop nach einem der Ansprüche 1 bis 7,
**dadurch gekennzeichnet,**
**dass** die Optikanordnungen (51, 52) der Abtasteinrichtung (50) jeweils durch eine rotierbare Scheibe (51, 52) ausgeführt sind.

9. Lichtmikroskop nach Anspruch 8,
**dadurch gekennzeichnet,**
**dass** die rotierbaren Scheiben (51, 52) auf einer gemeinsamen Antriebswelle (65) gelagert sind.

10. Lichtmikroskop nach einem der Ansprüche 1 bis 9,
**dadurch gekennzeichnet,**
**dass** eine Stelleinrichtung zum linearen Verschieben der Optikanordnungen (51, 52) der Abtasteinrichtung (50) vorhanden ist.

11. Lichtmikroskop nach einem der Ansprüche 1 bis 10,
**dadurch gekennzeichnet,**
**dass** die optischen Elemente (71) der ersten Optikanordnung (51) jeweils durch mindestens eine Linse (71), einen Spiegel oder ein lichtbeugendes Element gebildet sind und
**dass** die optischen Elemente (72) der zweiten Optikanordnung (52) jeweils durch mindestens eine Linse (72), einen Spiegel oder ein lichtbeugendes Element gebildet sind.

12. Lichtmikroskop nach einem der Ansprüche 1 bis 11,
**dadurch gekennzeichnet,**
**dass** die Abtasteinrichtung (50) eine Zoomoptikanordnung aufweist, welche gemeinsam mit der ersten Optikanordnung (51) bewegbar ist und welche so angeordnet ist, dass sie im Betrieb allein vom Probenlicht (45) durchlaufen wird.

13. Lichtmikroskop nach einem der Ansprüche 1-12,
**dadurch gekennzeichnet, dass**
im Beleuchtungsstrahlengang als Retroreflektor ein Spiegel oder Prisma vorgesehen ist wobei das Beleuchtungslicht durch den Retroreflektor in Richtung von Mikrospiegeln gelangt die eine Lochblende zum Passieren eines Teils des Beleuchtungslichtes in Richtung der Probe aufweisen.

14. Mikroskopieverfahren zum Untersuchen einer Probe (41), die in einer Probenebene (40) eines Lichtmikroskops positioniert wird,
bei dem Beleuchtungslicht (15) in die Probenebene (40) geleitet wird,
bei dem als Beleuchtungsabtastbewegung (81) das Beleuchtungslicht (15) über die Probenebene (40) bewegt wird und
bei dem von der Probe (41) kommendes Probenlicht (45) mit einer Detektoreinrichtung (60) nachgewiesen wird, welche mehrere Detektorelemente (61 - 64) aufweist,
wobei benachbarte Detektorelemente (63, 64) zueinander einen Abstand aufweisen, der kleiner ist als eine Airy-Disk, den ein Punkt der Probenebene (40) auf der Detektoreinrichtung (60) erzeugt,
**dadurch gekennzeichnet,**
**dass** Optikanordnungen (51, 52) einer Abtasteinrichtung (50) gleichzeitig in eine gemeinsame Richtung bewegt werden zum Erzeugen der Beleuchtungsabtastbewegung (81) und einer Detektionsabtastbewegung (82), welche zueinander entgegengesetzt sind,
wobei als Detektionsabtastbewegung (82) Empfangsbereiche der Detektorelemente (61 - 64) über die Probenebene (40) bewegt werden,
**dass** mit der ersten und der zweiten Optikanordnung (51, 52), welche jeweils mehrere nebeneinander angeordnete optische Elemente (71, 72) aufweisen, voneinander beabstandete Probenbereiche gleichzeitig untersucht werden, indem das Beleuchtungslicht von den optischen Elemente (71, 72) der ersten und/oder der zweiten Optikanordnung (51, 52) in Teilstrahlenbündel gespaltet werden,
wobei die erste und die zweite Optikanordnung (51, 52) so angeordnet sind,
**dass** über die erste Optikanordnung (51) Beleuchtungslicht (15) und Probenlicht (45) geleitet werden und dass über die zweite Optikanordnung (52) nur entweder Beleuchtungslicht (15) zur Probenebene (40) hin oder Probenlicht (45) zur Detektoreinrichtung (60) hin geleitet wird,
**dass** zum Erreichen einer Richtung der Detektionsabtastbewegung (82), welche entgegengesetzt zur Richtung der Beleuchtungsabtastbewegung (81) ist, mit der Abtasteinrichtung (50) Probenlicht (45) nicht invertierend und mit einem Abbildungsmaßstab von kleiner eins abgebildet wird.

15. Mikroskopieverfahren nach Anspruch 14,
**dadurch gekennzeichnet,**
**dass** die Beleuchtungsabtastbewegung (81) und die Detektionsabtastbewegung (82) während einer Integrationszeit von Detektorelementen (61 - 64) der Detektoreinrichtung (60) durchgeführt werden.

## Claims

1. Light microscope
having a sample plane (40), in which a sample (41) to be examined can be positioned,
having a light source (10) for emitting illuminating light (15),
having optical imaging means (16, 17, 20, 21, 30) for directing the illuminating light (15) into the sample plane (40), and
having a detector device (60) which, in order to detect sample light (45) which comes from the sample (41), has a plurality of detector elements (61-64),
adjacent detector elements (63, 64) having a spacing from one another which is smaller than an Airy disc generated by a point of the sample plane (40) on the detector device (60),
**characterized**
**in that** there is a scanning device (50) having at least a first and a second optical arrangement (51, 52),
**in that** the optical arrangements (51, 52) of the scanning device (50) can be moved simultaneously in a common direction in order to produce an illumination scanning movement (81) and a detection scanning movement (82), which are opposed to each other,
wherein the illumination scanning movement (81) is a scanning movement of illuminating light (15) over the sample plane (40) and
wherein receiving regions of the detector elements (61-64) can be moved over the sample plane (40) as the detection scanning movement (82),
**in that** the first and the second optical arrangement (51, 52) each have a plurality of optical elements (71, 72) arranged beside one another, with which mutually spaced sample regions can be examined simultaneously, by the optical elements (71, 72) of the first and/or the second optical arrangement (51, 52) splitting the illuminating light into partial beams,
**in that** the first and the second optical arrangement (51, 52) are arranged such that both a beam path of the sample light (45) from the sample plane (40) to the detector device (60) and a beam path of the illuminating light (15) from the light source (10) to the sample plane (40) run via the first optical arrangement (51) and only one of these two beam paths runs via the second optical arrangement (52), and
in order to achieve a direction of the detection scanning movement (82) which is opposite to the direction of the illuminating scanning movement (81), sample light (45) is imaged without inversion by the scanning device (50) and with a magnification of less than one.

2. Light microscope according to Claim 1,
**characterized in that**
the magnification is 1:2.

3. Light microscope according to Claim 1 or 2,
**characterized in that**
for the non-inverted imaging, the optical elements (71; 72) of the first or second optical arrangement (51; 52) each have a light-gathering action, and the optical elements (72; 71) of the other optical arrangement (52; 51) each have a light-scattering action.

4. Light microscope according to Claim 1 or 2,
**characterized**
**in that** the scanning device (50) has a third optical arrangement, which comprises one or more image field rotators and is arranged in the beam path of the sample light (45),
**in that**, with the first optical arrangement (51) or with the first and second optical arrangement (51, 52), it is possible to produce inverted images, which can be changed by the image field rotation of the image field rotator or rotators into non-inverted images.

5. Light microscope according to Claim 4,
**characterized in that**
the scanning device (50) has a third and a fourth optical arrangement as image field rotators, which each have an optical element (73, 74) for each of the optical elements (71) of the first optical arrangement (51).

6. Light microscope according to Claim 4 or 5,
**characterized**
**in that** the beam path of the sample light (45) from the sample plane (40) to the detector device (60) runs via the first and the second optical arrangement (51, 52), and
**in that** the optical elements (71, 72) of the first and second optical arrangement (51, 52) each have a light-gathering action.

7. Light microscope according to one of Claims 1 to 6,
**characterized**
**in that** to produce a confocal sample image between the first optical arrangement (51) and the sample plane (40) there is an aperture plate arrangement (55), which can be moved together with the first and second optical arrangement (51, 52), and
**in that** the aperture plate arrangement (55) has a respective aperture plate (75) for each optical element (71) of the first optical arrangement (51) .

8. Light microscope according to one of Claims 1 to 7,
**characterized**
**in that** the optical arrangements (51, 52) of the scanning device (50) are each implemented by a rotatable disc (51, 52).

9. Light microscope according to Claim 8,
**characterized**
**in that** the rotatable discs (51, 52) are mounted on a common drive shaft (65).

10. Light microscope according to one of Claims 1 to 9,
**characterized**
**in that** there is an actuating device for the linear displacement of the optical arrangements (51, 52) of the scanning device (50).

11. Light microscope according to one of Claims 1 to 10,
**characterized**
**in that** the optical elements (71) of the first optical arrangement (51) are each formed by at least one lens (71), a mirror or a light-diffracting element, and
**in that** the optical elements (72) of the second optical arrangement (52) are each formed by at least one lens (72), a mirror or a light-diffracting element.

12. Light microscope according to one of Claims 1 to 11,
**characterized**
**in that** the scanning device (50) has a zoom optical arrangement, which can be moved jointly with the first optical arrangement (51) and which is arranged such that in operation only the sample light (45) passes through it.

13. Light microscope according to one of Claims 1-12,
**characterized in that**
a mirror or prism is provided as retro-reflector in the illumination beam path, wherein the illuminating light passes through the retro-reflector in the direction of micro-mirrors, which have an aperture plate for the passage of some of the illuminating light in the direction of the sample.

14. Microscopy method for examining a sample (41) which is positioned in a sample plane (40) of a light microscope
in which illuminating light (15) is directed into the sample plane (40),
in which the illuminating light (15) is moved over the sample plane (40) as an illuminating scanning movement (81), and
in which sample light (45) coming from the sample (41) is detected by a detector device (60), which has a plurality of detector elements (61-64), adjacent detector elements (63, 64) having a spacing from one another which is smaller than an Airy disc generated by a point of the sample plane (40) on the detector device (60),
**characterized**
**in that** optical arrangements (51, 52) of a scanning device (50) are moved simultaneously in a common direction in order to produce the illuminating scanning movement (81) and a detection scanning movement (82), which are opposed each other,
wherein receiving regions of the detector elements (61-64) are moved over the sample plane (40) as detection scanning movement (82),
**in that** mutually spaced sample regions are examined simultaneously with the first and the second optical arrangement (51, 52), which each have a plurality of optical elements (71, 72) arranged beside one another, by the illuminating light from the optical elements (71, 72) of the first and/for the second optical arrangement (51, 52) being split into partial beams,
wherein the first and the second optical arrangement (51, 52) are arranged such that illuminating light (15) and sample light (45) are directed via the first optical arrangement (51), and that only either illuminating light (15) is directed towards the sample plane (40) or sample light (45) is directed towards the detector device (60) via the second optical arrangement (52),
**in that** to achieve a direction of the detection scanning movement (82) which is opposite to the direction of the illuminating scanning movement (81), sample light (45) is imaged without inversion by the scanning device (50) and with a magnification of less than one.

15. Microscopy method according to Claim 14,
**characterized**
**in that** the illuminating scanning movement (81) and the detection scanning movement (82) are carried out during an integration time of detector elements (61-64) of the detector device (60).

## Revendications

1. Microscope optique
avec un plan porte-échantillon (40), dans lequel un échantillon à examiner (41) peut être positionné, avec une source de lumière (10) pour émettre une lumière d'éclairage (15),
avec des moyens de reproduction optiques (16, 17, 20, 21, 30) pour conduire la lumière d'éclairage (15) dans le plan porte-échantillon (40), et
avec un dispositif de détecteur (60), qui présente plusieurs éléments de détecteur (61-64) pour détecter la lumière d'échantillon (45), qui provient de l'échantillon (41),
dans lequel des éléments de détecteur voisins (63, 64) présentent l'un par rapport à l'autre une distance, qui est plus petite qu'une tache d'Airy, qu'un point du plan porte-échantillon (40) produit sur le dispositif de détecteur (60),
**caractérisé en ce que**
il se trouve un dispositif de balayage (50) avec au moins un premier et un deuxième agencements optiques (51, 52),
les agencements optiques (51, 52) du dispositif de balayage (50) sont déplaçables simultanément dans une direction commune pour produire un mouvement de balayage d'éclairage (81) et un mouvement de balayage de détection (82), qui sont opposés l'un à l'autre,
dans lequel le mouvement de balayage d'éclairage (81) est un mouvement de balayage de lumière d'éclairage (15) sur le plan porte-échantillon (40), dans lequel comme mouvement de balayage de détection (82) des zones de réception des éléments de détecteur (61-64) sont déplaçables sur le plan porte-échantillon (40),
le premier et le deuxième agencements optiques (51, 52) présentent respectivement plusieurs éléments optiques disposés l'un à côté de l'autre (71, 72), avec lesquels des zones de l'échantillon espacées l'une de l'autre peuvent être examinées simultanément, du fait que les éléments optiques (71, 72) du premier et/ou du deuxième agencement(s) optique(s) (51, 52) divisent la lumière d'éclairage en faisceaux de rayons partiels,
le premier et le deuxième agencements optiques (51, 52) sont disposés de telle manière qu'aussi bien un trajet de rayons de la lumière d'échantillon (45) du plan porte-échantillon (40) au dispositif de détecteur (60) qu'un trajet de rayons de la lumière d'éclairage (15) de la source de lumière (10) au plan porte-échantillon (40) passent par le premier agencement optique (51) et que seul un de ces deux trajets de rayons passe par le deuxième agencement optique (52) et
pour obtenir une direction du mouvement de balayage de détection (82) qui est opposée à la direction du mouvement de balayage d'éclairage (81), la lumière d'échantillon (45) n'est pas inversée avec le dispositif de balayage (50) et est reproduite avec une échelle de reproduction inférieure à un.

2. Microscope optique selon la revendication 1, **caractérisé en ce que** l'échelle de reproduction vaut 1:2.

3. Microscope optique selon une revendication 1 ou 2, **caractérisé en ce que** pour la reproduction non inversée les éléments optiques (71; 72) du premier ou du second agencement optique (51; 52) ont chacun un effet de concentration de la lumière et les éléments optiques (72; 71) de l'autre agencement optique (52; 51) ont chacun un effet de dispersion de la lumière.

4. Microscope optique selon une revendication 1 ou 2, **caractérisé en ce que** le dispositif de balayage (50) présente un troisième agencement optique, qui comprend un ou plusieurs rotateur(s) de champ d'image et est disposé dans le trajet des rayons de la lumière d'échantillon (45), et **en ce qu'**avec le premier agencement optique (51) ou avec le premier et le deuxième agencements optiques (51, 52) on peut produire des reproductions inversées, qui peuvent être transformées en reproductions non inversées par la rotation du champ d'image du ou des rotateur(s) de champ d'image.

5. Microscope optique selon la revendication 4, **caractérisé en ce que** le dispositif de balayage (50) présente comme rotateurs de champ d'image un troisième et un quatrième agencements optiques, qui présentent respectivement un élément optique (73, 74) pour chacun des éléments optiques (71) du premier agencement optique (51).

6. Microscope optique selon une revendication 4 ou 5, **caractérisé en ce que** le trajet des rayons de la lumière d'échantillon (45) du plan porte-échantillon (40) au dispositif de détecteur (60) passe par le premier et le deuxième agencements optiques (51, 52) et **en ce que** les éléments optiques (71, 72) du premier et du deuxième agencements optiques (51, 52) ont chacun un effet de concentration de la lumière.

7. Microscope optique selon l'une quelconque des revendications 1 à 6, **caractérisé en ce que** pour produire une image d'échantillon confocale il se trouve entre le premier agencement optique (51) et le plan porte-échantillon (40) un agencement d'écran perforé (55), qui est déplaçable de concert avec le premier et le deuxième agencements optiques (51, 52), et **en ce que** l'agencement d'écran perforé (55) présente chaque fois un écran perforé (75) pour chaque élément optique (71) du premier agencement optique (51).

8. Microscope optique selon l'une quelconque des revendications 1 à 7, **caractérisé en ce que** les agencements optiques (51, 52) du dispositif de balayage (50) sont formés respectivement par un disque rotatif (51, 52).

9. Microscope optique selon la revendication 8, **caractérisé en ce que** les disques rotatifs (51, 52) sont montés sur un arbre d'entraînement commun (65).

10. Microscope optique selon l'une quelconque des revendications 1 à 9, **caractérisé en ce qu'**il se trouve un dispositif de réglage pour le déplacement linéaire des agencements optiques (51, 52) du dispositif de balayage (50).

11. Microscope optique selon l'une quelconque des revendications 1 à 10, **caractérisé en ce que** les éléments optiques (71) du premier agencement optique (51) sont formés respectivement par au moins une lentille (71), un miroir ou un élément de courbure de la lumière, et **en ce que** les éléments optiques (72) du deuxième agencement optique (52) sont formés respectivement par au moins une lentille (72), un miroir ou un élément de courbure de la lumière.

12. Microscope optique selon l'une quelconque des revendications 1 à 11, **caractérisé en ce que** le dispositif de balayage (50) présente un dispositif optique de zoom, qui est déplaçable de concert avec le premier agencement optique (51) et qui est disposé de telle manière qu'il ne soit traversé en fonctionnement que par la lumière d'échantillon (45) .

13. Microscope optique selon l'une quelconque des revendications 1 à 12, **caractérisé en ce qu'**il est prévu dans le trajet des rayons d'éclairage un miroir ou un prisme comme rétroréflecteur, dans lequel la lumière d'éclairage arrive à travers le rétroréflecteur en direction de micro-miroirs, qui présentent un écran perforé pour faire passer une partie de la lumière d'éclairage en direction de l'échantillon.

14. Procédé de microscopie pour examiner un échantillon (41), qui est positionné dans un plan porte-échantillon (40) d'un microscope optique,
dans lequel on conduit une lumière d'éclairage (15) dans le plan porte-échantillon (40),
dans lequel on déplace comme mouvement de balayage d'éclairage (81) la lumière d'éclairage (15) sur le plan porte-échantillon (40), et
dans lequel on détecte une lumière d'échantillon (45) provenant de l'échantillon (41) avec un dispositif de détecteur (60), qui présente plusieurs éléments de détecteur (61-64),
dans lequel des éléments de détecteur voisins (63, 64) présentent l'un par rapport à l'autre une distance, qui est plus petite qu'une tache d'Airy, qu'un point du plan porte-échantillon (40) produit sur le dispositif de détecteur (60),
**caractérisé en ce que**
on déplace des agencements optiques (51, 52) d'un dispositif de balayage (50) simultanément dans une direction commune pour produire le mouvement de balayage d'éclairage (81) et un mouvement de balayage de détection (82), qui sont opposés l'un à l'autre,
dans lequel on déplace comme mouvement de balayage de détection (82) des zones de réception des éléments de détecteur (61-64) sur le plan porte-échantillon (40),
avec le premier et le deuxième agencements optiques (51, 52), qui présentent respectivement plusieurs éléments optiques (71, 72) disposés l'un à côté de l'autre, on examine simultanément des zones de l'échantillon espacées l'une de l'autre, du fait que la lumière d'éclairage est divisée par les éléments optiques (71, 72) du premier et/ou du deuxième agencement(s) optique(s) (51, 52) en faisceaux de rayons partiels,
dans lequel le premier et le deuxième agencements optiques (51, 52) sont disposés de telle manière que la lumière d'éclairage (15) et la lumière d'échantillon (45) soient conduites à travers le premier agencement optique (51) et que seule soit la lumière d'éclairage (15) vers le plan porte-échantillon (40) soit la lumière d'échantillon (45) vers le dispositif de détecteur (60) soit conduite à travers le deuxième agencement optique (52),
pour obtenir une direction du mouvement de balayage de détection (82), qui est opposée à la direction du mouvement de balayage d'éclairage (81), la lumière d'échantillon (45) n'est pas inversée avec le dispositif de balayage (50) et elle est reproduite avec une échelle de reproduction inférieure à un.

15. Procédé de microscopie selon la revendication 14, **caractérisé en ce que** l'on effectue le mouvement de balayage d'éclairage (81) et le mouvement de balayage de détection (82) pendant un temps d'intégration d'éléments détecteurs (61-64) du dispositif de détecteur (60).
